# EUROPEAN PATENT SPECIFICATION

(11) **EP 3 926 865 B1**
(45) Date of publication and mention of the grant of the patent: **01.11.2023**
(21) Application number: 19919199.0
(22) Date of filing: 08.03.2019
(51) Int. Cl.: H04L 1/06, H04B 7/06, H04L 27/26, H04W 16/28, H04L 5/00

(54) **TRANSMISSION DEVICE, RECEIVING DEVICE, AND WIRELESS COMMUNICATION SYSTEM FOR GENERATING TRANSMISSION BLOCK PATTERNS IN TIME AND FREQUENCY DIRECTION**
SENDEVORRICHTUNG, EMPFANGSVORRICHTUNG UND DRAHTLOSES KOMMUNIKATIONSSYSTEM ZUR ERZEUGUNG VON SENDEBLOCKMUSTERN IN ZEIT- UND FREQUENZRICHTUNG
DISPOSITIF DE TRANSMISSION, DISPOSITIF DE RÉCEPTION ET SYSTÈME DE COMMUNICATION SANS FIL POUR LA GÉNÉRATION DE BLOCS DE TRANSMISSION DANS LE SENS DU TEMPS ET DE LA FRÉQUENCE

(43) Date of publication of application: 22.12.2021
(73) Proprietor: MITSUBISHI ELECTRIC CORPORATION, Chiyoda-ku Tokyo 100-8310 (JP)
(72) Inventor: TAIRA, Akinori, Tokyo 100-8310 (JP); SANO, Hiroyasu, Tokyo 100-8310 (JP); MASUDA, Shinji, Tokyo 100-8310 (JP)
(74) Representative: Pfenning, Meinig & Partner mbB
(86) International application number: PCT/JP2019/009506
(87) International publication number: WO 2020/183547

(56) References cited:
- WO-A1-2008/099785
- WO-A1-2016/162993
- US-A1- 2009 323 838
- US-A1- 2010 048 151
- US-A1- 2010 271 930
- US-A1- 2016 043 843

## Description

### Field

The present invention relates to a transmission device, to a reception device, to a wireless communication system, to a control circuit, and to a program storage medium each including multiple antennas.

### Background

With an increase in the complexity of the wireless communication technologies, wireless technologies have recently been applied even to mission-critical applications, in which failure of information transmission is unacceptable. Typical examples of the application include automatic control of an automobile, a train, and the like, and remote control of a robot, construction equipment, and the like. These applications require reliable wireless transmission, but in practice, reliable wireless transmission is not easy to realize due to problems that are specific to wireless communication, such as shielding between a transmitter and a receiver, multipath reflection (i.e., occurrence of a delayed wave), a rapid change in a propagation channel condition, and interference from another station. To improve delivery assurance in wireless transmission, diversity technologies for providing transmission with redundancy have conventionally been developed.

One general transmission diversity technology is space-time block coding (STBC), in which a transmission device uses multiple antennas to transmit a piece of information in a distributed manner over the multiple antennas and over multiple time resources, and the reception device combines the pieces of information thus to provide stable communication. In addition, there is also a technique for a cellular system called space-frequency block coding (SFBC), in which a transmission device transmits information in a distributed manner over multiple antennas and over multiple subcarriers arranged in the frequency direction, and the reception device combines the information.

Moreover, wireless communication under a non-exclusive frequency assignment environment such as the industrial, scientific, and medical (ISM) bands exhibits reliability that largely depends on interference from another system. To provide highly reliable communication in such an environment, a technology is essential that monitors reliability of a signal received by a reception device. Patent Literature 1 discloses a technology in which data symbols and null symbols are arranged to form a "unit pattern" in a certain area defined in a time-frequency space on a two-dimensional plane, and the reception station considers received electrical power of a null symbol portion to be interference electrical power thus to determine reliability levels of nearby data symbols.

### Citation List

### Patent Literature

Patent Literature 1: Japanese Patent No. 5900716. US patent application US 2009/0323838 A1 discusses a method used in a wireless communication apparatus based on reference signals including obtaining a plurality of pilot rules and obtaining radio channel information of a radio channel between the wireless communication apparatus and another wireless communication apparatus. The method includes selecting applicable pilot rules from the plurality of pilot rules based on the radio channel information, creating at least one pilot structure to be used in the radio channel; and using the created at least one pilot structure to transmit data over the radio channel. US patent application US 2010/0048151 A1 A discusses a communication device that constitutes a multicarrier wireless transmission system and communicates with another communication device including a function of measuring an interference-plus-noise power by using a null symbol inserted into a received data, includes a null-symbol inserting unit that arranges a predetermined number of null symbols in a data-symbol storing region of a data frame to be transmitted to the receiver to generate a data frame including the null symbols, thereby realizing measuring an interference power in a data transmission section with high accuracy.

### Summary

The claimed invention is set out in the appended set of claims corresponding to the fifth and sixth embodiments.

### Technical Problem

In view of a limited amount of remaining frequency resources, it is anticipated that usage such as use of the ISM bands having a limited range of frequencies being shared by many users will become more common. In addition, wireless communication is expected to be applied also to, in addition to simple information transmission, applications requiring high reliability and delivery assurance such as device control, as an important application field. That is, there is a demand for an advantage combining the advantage of the transmission diversity technology and the advantage of the technology of Patent Literature 1, which enables monitoring of under-interference condition of a reception signal.

Some conditions exist to combine the transmission scheme of Patent Literature 1 with time-space or frequency-space diversity technology such as STBC or SFBC. That is, a problem exists in that there is a need for a reception device to have functions such as a function that enables estimation of information on the transmission path from each antenna, and a function of setting a "unit pattern" that can ensure symbol arrangements adjacent to each other in the frequency direction or in the temporal direction.

The present invention has been made in view of the foregoing, and it is an object of the present invention to provide a transmission device capable of providing communication using transmission diversity in an environment including a transmission path that is likely to be subjected to interference.

### Solution to Problem

In order to solve the above problem and achieve the object, a transmission device is provided as defined in independent claim 1.

### Advantageous Effects of Invention

A transmission device according to the present invention provides an advantage in enabling communication using transmission diversity in an environment including a transmission path that is likely to be subjected to interference.

### Brief Description of Drawings

FIG. 1 is a diagram illustrating an example configuration of a wireless communication system according to a first embodiment.
FIG. 2 is a block diagram illustrating an example configuration of a transmission device according to the first embodiment.
FIG. 3 is a flowchart illustrating an operation of the transmission device according to the first embodiment.
FIG. 4 is a diagram illustrating an example configuration of a transmission block pattern generation unit according to the first embodiment, and an example of transmission block pattern generated by the transmission block pattern generation unit.
FIG. 5 is a flowchart illustrating an operation of the transmission block pattern generation unit according to the first embodiment.
FIG. 6 is a block diagram illustrating an example configuration of a reception device according to the first embodiment.
FIG. 7 is a flowchart illustrating an operation of the reception device according to the first embodiment.
FIG. 8 is a diagram illustrating an example of a case in which the processing circuitry included in the transmission device or in the reception device according to the first embodiment includes a processor and a memory.
FIG. 9 is a diagram illustrating an example of a case in which the processing circuitry included in the transmission device or in the reception device according to the first embodiment includes a dedicated hardware element.
FIG. 10 is a diagram illustrating an example configuration of a transmission block pattern generation unit according to a second embodiment, and an example of transmission block pattern generated by the transmission block pattern generation unit.
FIG. 11 is a flowchart illustrating an operation of the transmission block pattern generation unit according to the second embodiment.
FIG. 12 is a diagram illustrating an example configuration of a transmission block pattern generation unit according to a third embodiment, and an example of transmission block pattern generated by the transmission block pattern generation unit.
FIG. 13 is a flowchart illustrating an operation of the transmission block pattern generation unit according to the third embodiment.
FIG. 14 is a diagram illustrating an example configuration of a transmission block pattern generation unit according to a fourth embodiment, and an example of transmission block pattern generated by the transmission block pattern generation unit.
FIG. 15 is a flowchart illustrating an operation of the transmission block pattern generation unit according to the fourth embodiment.
FIG. 16 is a diagram illustrating the example configuration of the transmission block pattern generation unit according to the fourth embodiment, and another example of transmission block pattern generated by the transmission block pattern generation unit.
FIG. 17 is a block diagram illustrating an example configuration of a transmission device according to a fifth embodiment.
FIG. 18 is a flowchart illustrating an operation of the transmission device according to the fifth embodiment.
FIG. 19 is a diagram illustrating an example configuration of a transmission block pattern generation unit according to the fifth embodiment, and an example of transmission block patterns generated by the transmission block pattern generation unit.
FIG. 20 is a diagram illustrating an example arrangement of transmission block patterns performed by the subcarrier mapping unit according to the fifth embodiment.
FIG. 21 is a block diagram illustrating an example configuration of a reception device according to the fifth embodiment.
FIG. 22 is a flowchart illustrating an operation of the reception device according to the fifth embodiment.
FIG. 23 is a diagram illustrating an example configuration of a transmission block pattern generation unit according to a sixth embodiment, and an example of transmission block patterns generated by the transmission block pattern generation unit.

### Description of Embodiments

A transmission device, a reception device, a wireless communication system, a control circuit, and a program storage medium according to embodiments of the present invention will be described in detail below with reference to the drawings. Note that these embodiments are not intended to limit the scope of this invention. The claimed invention as defined in the claims pursues the fifth and the sixth embodiment. The fifth and sixth embodiment are derived from the first through fourth embodiments, which are presented for understanding the claimed invention.

### First Embodiment.

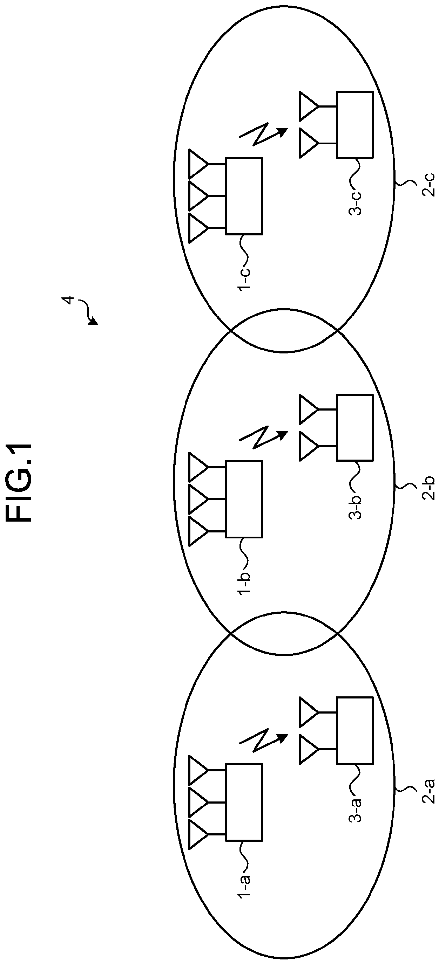

FIG. 1 is a diagram illustrating an example configuration of a wireless communication system 4 according to a first embodiment of the present invention. The wireless communication system 4 includes base stations 1-a, 1-b, and 1-c, and mobile stations 3-a, 3-b, and 3-c. The base stations 1-a, 1-b, and 1-c respectively serve cells 2-a, 2-b, and 2-c. When no distinction needs to be made, the following description may refer to the base stations 1-a, 1-b, and 1-c as base station 1, and may refer to the cells 2-a, 2-b, and 2-c as cell 2. The mobile stations 3-a, 3-b, and 3-c each communicate with a corresponding one of the base stations 1 depending on the cell 2 where that mobile station is located. When no distinction needs to be made, the following description may refer to the mobile stations 3-a, 3-b, and 3-c as mobile station 3.

The wireless communication system 4 ideally and desirably separates the frequencies completely in nearby ones of the cells 2. However, it is difficult to assign different frequencies to all of the cells 2 from the viewpoint of frequency use efficiency, and the same frequency is thus used in those of the cells 2 located apart from each other by a certain distance. In addition, in cases in which a large number of systems share a range of frequencies such as in a case of use of ISM bands, interference may occur within a system and from another system. A transmission device and a reception device will be described below that are capable of performing highly reliable communication even in an environment where such interference occurs. Note that the following description assumes an orthogonal frequency division multiplexing (OFDM) scheme, but the communication scheme is not particularly limited to OFDM, and any communication scheme may be used that performs information transmission based on time and frequency division.

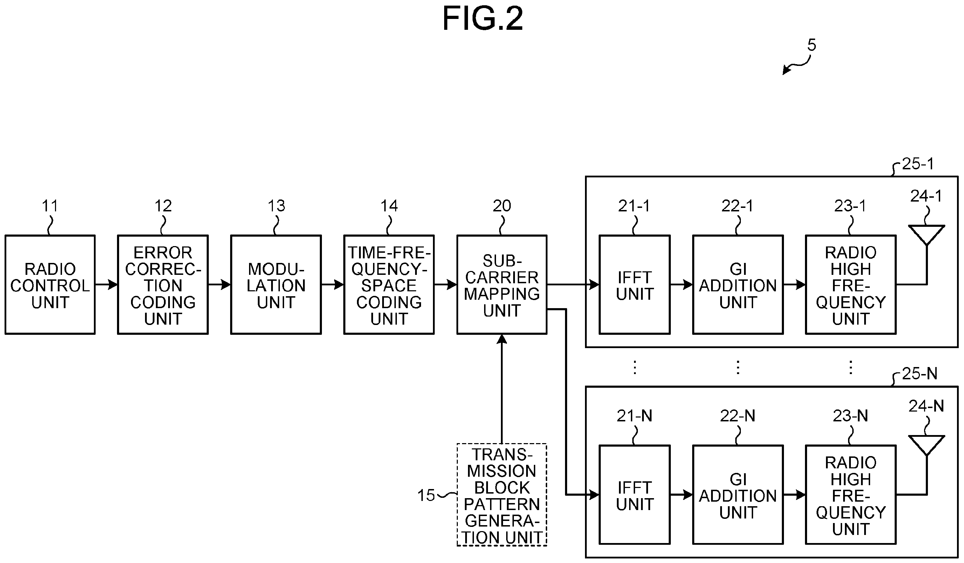

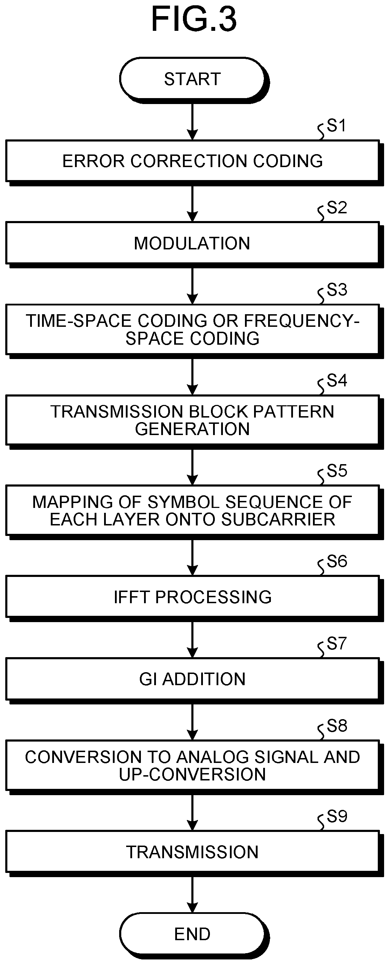

A configuration and an operation of the transmission device will now be described. FIG. 2 is a block diagram illustrating an example configuration of a transmission device 5 according to the first embodiment. FIG. 3 is a flowchart illustrating an operation of the transmission device 5 according to the first embodiment. The transmission device 5 corresponds to the base station 1 of the wireless communication system 4 described above. The transmission device 5 includes a radio control unit 11, an error correction coding unit 12, a modulation unit 13, a time-frequency-space coding unit 14, a transmission block pattern generation unit 15, a subcarrier mapping unit 20, inverse fast Fourier transform (IFFT) units 21-1 to 21-N, guard interval (GI) addition units 22-1 to 22-N, radio high frequency units 23-1 to 23-N, and antennas 24-1 to 24-N. Note that the IFFT unit 21-1, the GI addition unit 22-1, the radio high frequency unit 23-1, and the antenna 24-1 together form a transmission processing unit 25-1. A similar configuration applies to the other sets of elements, and the IFFT unit 21-N, the GI addition unit 22-N, the radio high frequency unit 23-N, and the antenna 24-N together form a transmission processing unit 25-N.

When no distinction needs to be made, the following description may refer to the IFFT units 21-1 to 21-N as IFFT unit 21, the GI addition units 22-1 to 22-N as GI addition unit 22, the radio high frequency units 23-1 to 23-N as radio high frequency unit 23, the antennas 24-1 to 24-N as antenna 24, and the transmission processing units 25-1 to 25-N as transmission processing unit 25.

The radio control unit 11 receives a bit sequence, i.e., information to be transmitted, from an upper layer not illustrated, and outputs the bit sequence to the error correction coding unit 12 taking into consideration transmission timing. The error correction coding unit 12 performs error correction coding on the bit sequence received from the radio control unit 11, and outputs the coded bit sequence (step S1). The modulation unit 13 modulates the error correction-coded bit sequence using a predetermined modulation technique, and thus provides conversion into a sequence of symbols on the IQ plane (step S2).

The time-frequency-space coding unit 14 applies a predetermined time-space coding (hereinafter referred to as STBC) or frequency-space coding (hereinafter referred to as SFBC) technique to the sequence of modulated symbols, and outputs a sequence of coded symbols of each layer (step S3). The time-frequency-space coding unit 14 is a coding unit that performs coding on a sequence of modulated symbols to generate sequences of symbols for multiple respective layers. In this regard, a layer is associated with a space, and refers to, for example, a sequence of transmission symbols for each of the antennas 24-1 to 24-N used in transmission. Note that one layer is not necessarily associated with one antenna, and the transmission device 5 may thus perform beam forming using multiple antennas to transmit information on each layer on a different beam.

The transmission block pattern generation unit 15 generates a transmission block pattern, which is a subcarrier map used on a per-layer basis (step S4). A transmission block pattern includes at least one minimum unit block, which includes at least one data block formed of resources arranged consecutively in the temporal direction or in the frequency direction, and a null symbol. A minimum unit block is a smallest unit block for defining the positions of a data symbol and of a null symbol. The following description may refer to a data block as DB. A configuration and an operation of the transmission block pattern generation unit 15 will be described in detail later.

The subcarrier mapping unit 20 maps the sequence of symbols of each layer onto a subcarrier according to the transmission block pattern (step S5). Specifically, the subcarrier mapping unit 20 deploys the transmission block pattern in a repeating arrangement in the temporal direction and in the frequency direction thus to map the sequences of symbols for the multiple respective layers onto subcarriers. The subcarrier mapping unit 20 maps each symbol of a sequence of symbols to a position of a data block in the transmission block pattern, and maps a null symbol, corresponding to zero electrical power, to a position of a null symbol in the transmission block pattern. The IFFT unit 21 performs IFFT processing on a signal of an applicable layer mapped by the subcarrier mapping unit 20 on a per-OFDM symbol basis thus to convert a frequency signal into a temporal signal (step S6). The GI addition unit 22 adds a GI to the temporal signal obtained by the conversion performed by the IFFT unit 21 connected thereto (step S7). The radio high frequency unit 23 converts the signal including the GI added by the GI addition unit 22 connected thereto, from a digital signal to an analog signal, up-converts the analog signal (step S8), and transmits the up-converted signal from the antenna 24 connected thereto (step S9). As described above, the transmission processing unit 25 transmits the multiple signals that have been mapped by the subcarrier mapping unit 20.

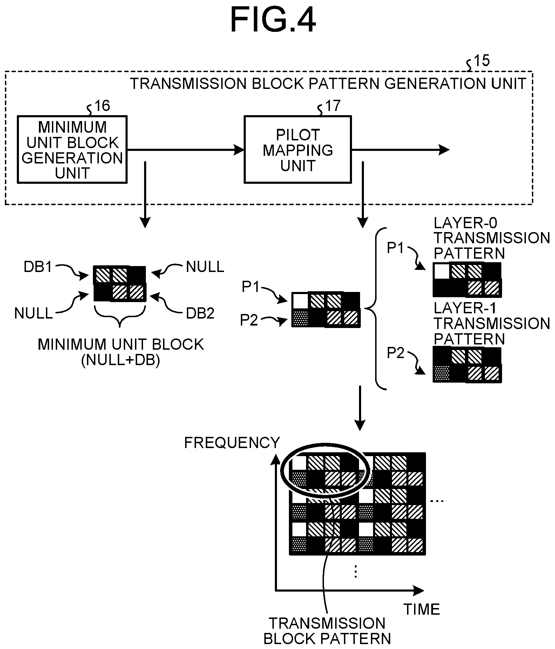

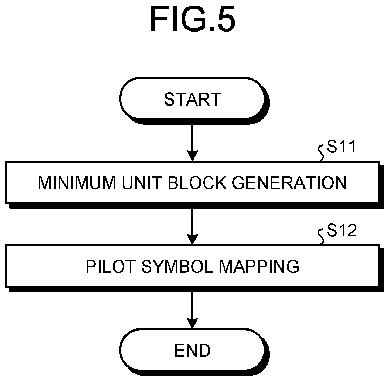

A configuration and an operation of the transmission block pattern generation unit 15 will now be described in detail. FIG. 4 is a diagram illustrating an example configuration of the transmission block pattern generation unit 15 according to the first embodiment, and an example of transmission block pattern generated by the transmission block pattern generation unit 15. FIG. 5 is a flowchart illustrating an operation of the transmission block pattern generation unit 15 according to the first embodiment. Although the description referring to FIG. 4 assumes the use of STBC or SFBC for two layers, the number of the layers is not limited to two. The transmission block pattern generation unit 15 includes a minimum unit block generation unit 16 and a pilot mapping unit 17.

The minimum unit block generation unit 16 generates a minimum unit block consisting of at least one data block including a codeword of STBC or SFBC and at least one null for interference measurement (step S11). In the example of FIG. 4, two layers (=two subcarriers) form a unit of STBC or SFBC. Because space coding is susceptible to a change in a transmission path condition, each data block is formed of subcarriers arranged consecutively along the time axis or along the frequency axis. In the example of FIG. 4, the minimum unit block is formed of two data blocks and two null symbols.

The pilot mapping unit 17 places pilot symbols P1 and P2 for synchronization detection on the minimum unit block generated by the minimum unit block generation unit 16 (step S12). It can also be said that the pilot mapping unit 17 adds the pilot symbols P1 and P2 to the minimum unit block. The pilot symbol P1 is a pilot symbol for layer 0, while the pilot symbol P2 is a pilot symbol for layer 1. In a configuration having N layers, the pilot mapping unit 17 assigns at least one pilot symbol to each layer, that is, N or more pilot symbols in total. As illustrated in the layer-0 transmission pattern of FIG. 4, the transmission device 5 transmits a pilot symbol at the position of the pilot symbol P1, and uses a null symbol at the position of the pilot symbol P2, for layer 0. Similarly, as illustrated in the layer 1 transmission pattern of FIG. 4, the transmission device 5 uses a null symbol at the position of the pilot symbol P1, and transmits a pilot symbol at the position of the pilot symbol P2, for layer 1. Similar arrangement applies to the configuration having N layers.

In the first embodiment, the transmission block pattern generation unit 15 outputs, as the transmission block pattern, the output from the pilot mapping unit 17 including the pilot symbols P1 and P2 being mapped onto the minimum unit block. That is, the transmission block pattern in the first embodiment is a first pattern, which is a combination of the minimum unit block and a pilot symbol for each layer. The subcarrier mapping unit 20 deploys the transmission block pattern obtained from the transmission block pattern generation unit 15 in a seamless repeating arrangement on the frequency-time plane, as illustrated in FIG. 4, to arrange the sequence of symbols on a per-layer basis.

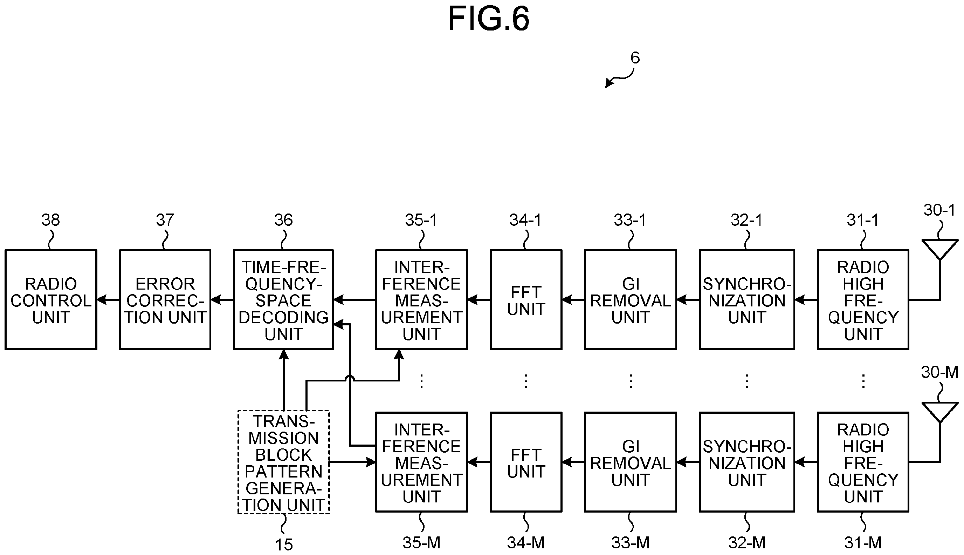

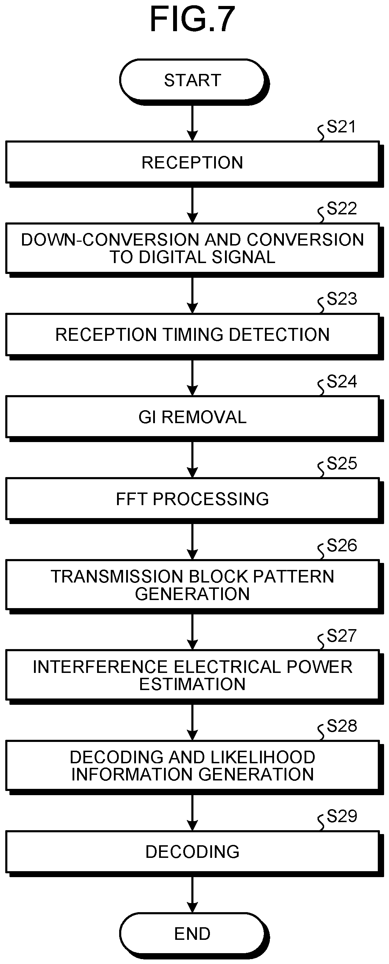

A configuration and an operation of the reception device will next be described. FIG. 6 is a block diagram illustrating an example configuration of a reception device 6 according to the first embodiment. FIG. 7 is a flowchart illustrating an operation of the reception device 6 according to the first embodiment. The reception device 6 corresponds to the mobile station 3 of the wireless communication system 4 described above. That is, the reception device 6 forms the wireless communication system 4 with the transmission device 5, and receives a signal transmitted from the transmission device 5. The reception device 6 includes antennas 30-1 to 30-M, radio high frequency units 31-1 to 31-M, synchronization units 32-1 to 32-M, GI removal units 33-1 to 33-M, fast Fourier transform (FFT) units 34-1 to 34-M, interference measurement units 35-1 to 35-M, the transmission block pattern generation unit 15, a time-frequency-space decoding unit 36, an error correction unit 37, and a radio control unit 38.

When no distinction needs to be made, the following description may refer to the antennas 30-1 to 30-M as antenna 30, the radio high frequency units 31-1 to 31-M as radio high frequency unit 31, the synchronization units 32-1 to 32-M as synchronization unit 32, the GI removal units 33-1 to 33-M as GI removal unit 33, the FFT units 34-1 to 34-M as FFT unit 34, and the interference measurement units 35-1 to 35-M as interference measurement unit 35.

The antenna 30 receives a radio wave (step S21). The reception device 6 is capable of receiving a radio wave with a single antenna using a coding technique such as STBC or SFBC, which is a typical example, but may also receive a radio wave using multiple antennas to achieve higher performance. The radio high frequency unit 31 down-converts the reception signal received by the antenna 30 connected thereto, and converts the resulting signal from an analog signal to a digital signal (step S22). The synchronization unit 32 compensates the frequency offset in the reception signal obtained by digitization by the radio high frequency unit 31 connected thereto to detect reception timing (step S23). The GI removal unit 33 removes the GI based on information on the reception timing detected by the synchronization unit 32 connected thereto (step S24). The FFT unit 34 performs FFT processing on the reception signal with the GI removed by the GI removal unit 33 connected thereto, thus to convert a temporal signal into a complex reception signal along the frequency axis (step S25).

The transmission block pattern generation unit 15 generates a transmission block pattern, which is a subcarrier map used on a per-layer basis (step S26). The transmission block pattern generation unit 15 in the reception device 6 operates similarly to the transmission block pattern generation unit 15 in the transmission device 5. That is, the reception device 6 includes the transmission block pattern generation unit 15 having the same functionality as the functionality of the transmission block pattern generation unit 15 included in the transmission device 5. The transmission block pattern generation unit 15 in the reception device 6 generates and outputs the same transmission block pattern as the transmission block pattern generated by the transmission block pattern generation unit 15 in the transmission device 5.

The interference measurement unit 35 estimates interference electrical power for a null subcarrier, onto which a null symbol has been mapped, based on the transmission block pattern generated by the transmission block pattern generation unit 15, using the reception signal of the signal transmitted from the transmission device 5, that is, using the complex reception signal received from the FFT unit 34 connected thereto (step S27). Specifically, the interference measurement unit 35 obtains the position of the null for interference measurement, i.e., the position of the null subcarrier, from the information on the transmission block pattern, and estimates interference electrical power at the position of a subcarrier that transmits a nearby data block, from the received-power value of the null subcarrier. Note that, in the interference electrical power estimation, the interference measurement unit 35 may use only the power value of the nearest null subcarrier, or may use power values of multiple nearby null subcarriers. Thus, there is no limitation on the method for estimating interference electrical power.

The time-frequency-space decoding unit 36 is a decoding unit that decodes the reception signal into a data block based on the transmission block pattern. The time-frequency-space decoding unit 36 generates a weighted combination of information that is based on the reception signals received by the multiple antennas 30-1 to 30-M, based on the pieces of information on interference electrical power respectively estimated by the interference measurement units 35-1 to 35-M, and generates likelihood information on a per-symbol or per-bit basis (step S28). That is, the time-frequency-space decoding unit 36 generates likelihood information on each symbol based on information on interference electrical power. The error correction unit 37 performs error correction processing based on the likelihood information, and decodes the bit sequence (step S29). The radio control unit 38 outputs the decoded bit sequence to an upper layer not illustrated.

A hardware configuration of the transmission device 5 and of the reception device 6 will next be described. In the transmission device 5, the components other than the transmission block pattern generation unit 15 and other than the subcarrier mapping unit 20 are implemented in a general transmitter. The transmission block pattern generation unit 15 and the subcarrier mapping unit 20 are implemented in processing circuitry. In addition, in the reception device 6, the components other than the transmission block pattern generation unit 15, other than the interference measurement unit 35, and other than the time-frequency-space decoding unit 36 are implemented in a general receiver. The transmission block pattern generation unit 15, the interference measurement unit 35, and the time-frequency-space decoding unit 36 are implemented in processing circuitry. The processing circuitry may be a combination of a processor that executes a program stored in a memory and the memory, or may be a dedicated hardware element.

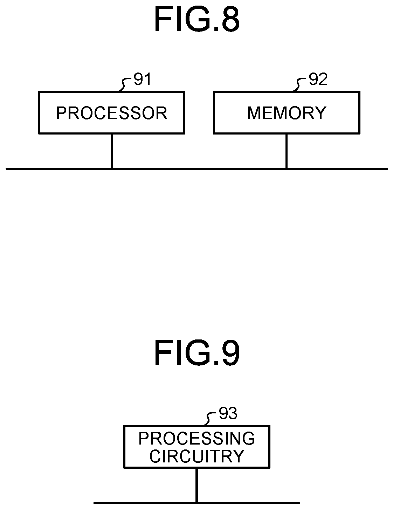

FIG. 8 is a diagram illustrating an example of a case in which the processing circuitry included in the transmission device 5 or in the reception device 6 according to the first embodiment includes a processor and a memory. In a case in which the processing circuitry includes a processor 91 and a memory 92, the functionality of the processing circuitry of the transmission device 5 or of the reception device 6 is implemented in software, firmware, or a combination of software and firmware. The software or firmware is described as a program or programs, and is stored in the memory 92. In the processing circuitry, the functionality is implemented by the processor 91 by reading and executing a program stored in the memory 92. That is, the processing circuitry includes the memory 92 for storing programs that cause the processing of the transmission device 5 or of the reception device 6 to be performed. It can also be said that these programs cause a computer to perform a procedure and a method of the transmission device 5 or of the reception device 6.

In this regard, the processor 91 may be a central processing unit (CPU), a processing unit, a computing unit, a microprocessor, a microcomputer, a digital signal processor (DSP), or the like. In addition, the memory 92 may be, for example, a non-volatile or volatile semiconductor memory such as a random access memory (RAM), a read-only memory (ROM), a flash memory, an erasable programmable ROM (EPROM), or an electrically EPROM (EEPROM) (registered trademark); a magnetic disk, a flexible disk, an optical disk, a compact disc, a MiniDisc, a digital versatile disc (DVD), or the like.

FIG. 9 is a diagram illustrating an example of a case in which the processing circuitry included in the transmission device 5 or in the reception device 6 according to the first embodiment includes a dedicated hardware element. In a case in which the processing circuitry includes a dedicated hardware element, processing circuitry 93 illustrated in FIG. 9 may be, for example, a single circuit, a multiple circuit, a programmed processor, a parallel programmed processor, an application specific integrated circuit (ASIC), a field programmable gate array (FPGA), or a combination thereof. The functionality of the transmission device 5 or of the reception device 6 may be implemented in the processing circuitry 93 on a function-by-function basis, or be implemented in the processing circuitry 93 collectively as a whole.

Note that the functionality of the transmission device 5 or of the reception device 6 may be implemented partially in a dedicated hardware element and partially in software or firmware. Thus, the processing circuitry can implement each functionality described above in a dedicated hardware element, software, firmware, or a combination thereof.

As described above, according to the present embodiment, the transmission device 5 performs subcarrier assignment based on the transmission block pattern that maps a pilot symbol onto the minimum unit block, and transmits multiple signals for each layer from the multiple antennas 24. The reception device 6 estimates interference electrical power based on the same transmission block pattern as the transmission block pattern of the transmission device 5, and generates likelihood information on each symbol. Thus, the transmission device 5 and the reception device 6 can provide the advantage of transmission diversity provided using multiple antennas, and the reception device 6 can generate likelihood information based on interference electrical power to apply error correction. Thus, highly reliable wireless transmission can be provided.

In addition, the transmission device 5 and the reception device 6 enable multilevel modulation to be used by addition of pilot symbols, and can thus increase transmission capacity. The transmission device 5 and the reception device 6 can also increase the communication distance by application of transmission diversity. In addition, the transmission device 5 and the reception device 6 can change null subcarrier density to any value depending on environmental conditions of the system, and can thus improve frequency use efficiency.

### Second Embodiment.

A second embodiment uses a transmission block pattern that is generated by cyclically shifting the transmission block pattern generated as described in the first embodiment. Differences from the first embodiment will be described.

The transmission device 5 of the second embodiment is configured such that the transmission block pattern generation unit 15 in the transmission device 5 of the first embodiment illustrated in FIG. 2 is replaced with a transmission block pattern generation unit 15a. The overall flow of operation of the transmission device 5 of the second embodiment is similar to the flow of operation of the transmission device 5 of the first embodiment, illustrated in the flowchart of FIG. 3. Similarly, the reception device 6 of the second embodiment is configured such that the transmission block pattern generation unit 15 in the reception device 6 of the first embodiment illustrated in FIG. 6 is replaced with the transmission block pattern generation unit 15a. The overall flow of operation of the reception device 6 of the second embodiment is similar to the flow of operation of the reception device 6 of the first embodiment, illustrated in the flowchart of FIG. 7.

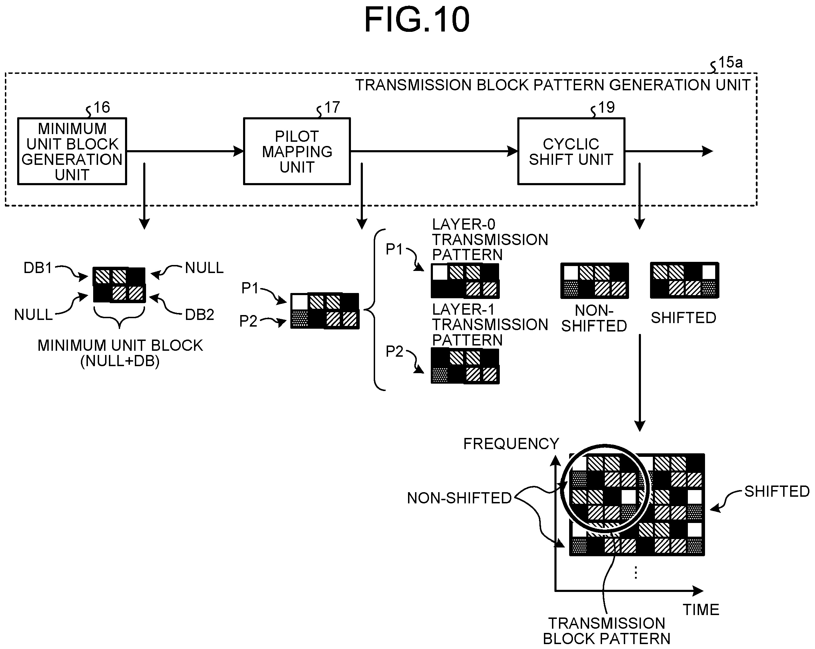

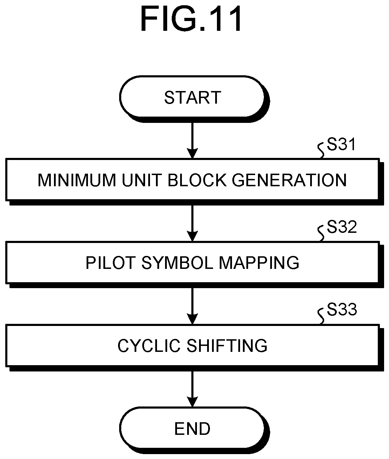

A configuration and an operation of the transmission block pattern generation unit 15a will now be described in detail. FIG. 10 is a diagram illustrating an example configuration of the transmission block pattern generation unit 15a according to the second embodiment, and an example of transmission block pattern generated by the transmission block pattern generation unit 15a. The transmission block pattern generation unit 15a includes the minimum unit block generation unit 16, the pilot mapping unit 17, and a cyclic shift unit 19. FIG. 11 is a flowchart illustrating an operation of the transmission block pattern generation unit 15a according to the second embodiment. In FIG. 11, step S31 and step S32 are similar to step S11 and step S12 of the flowchart of the first embodiment illustrated in FIG. 5.

The cyclic shift unit 19 cyclically shifts, in the temporal direction, the pattern including the pilot symbols P1 and P2 having been placed, or mapped, by the pilot mapping unit 17 (step S33). As illustrated in FIG. 10, the cyclic shift unit 19 is capable of generating two types of patterns, that is, a pattern when no cyclic shifting is applied to the pattern including the pilot symbols P1 and P2 having been placed, or mapped, and a pattern when cyclic shifting is applied to the pattern including the pilot symbols P1 and P2 having been placed, or mapped. Note that due to indivisibility of the minimum unit block, only two types of patterns can be produced in this example. The cyclic shift unit 19 alternately deploys these two types of patterns to form a transmission block pattern. That is, the transmission block pattern in the second embodiment is a second pattern, which is a combination of the first pattern and a pattern generated by cyclic shifting of the first pattern in the temporal direction without dividing of the minimum unit block.

The transmission device 5 performs subcarrier assignment based on information on the cyclically-shifted transmission block pattern, and the reception device 6 performs interference electrical power estimation, decoding, and the like based on information on the cyclically-shifted transmission block pattern, thus to provide signal transmission.

Note that the transmission device 5 and the reception device 6 of the second embodiment have a hardware configuration similar to the hardware configuration of the transmission device 5 and of the reception device 6 of the first embodiment.

As described above, according to the present embodiment, the transmission device 5 and the reception device 6 are configured to use a cyclically-shifted transmission block pattern. Thus, the transmission device 5 and the reception device 6 cause the position of the null symbol in the transmission block pattern to be randomized, and therefore, further improvement is expected in transmission characteristics as compared to the first embodiment.

### Third Embodiment.

A third embodiment uses a transmission block pattern that is generated by adding a data block to the transmission block pattern generated as described in the first embodiment. Differences from the first embodiment will be described.

The transmission device 5 of the third embodiment is configured such that the transmission block pattern generation unit 15 in the transmission device 5 of the first embodiment illustrated in FIG. 2 is replaced with a transmission block pattern generation unit 15b. The overall flow of operation of the transmission device 5 of the third embodiment is similar to the flow of operation of the transmission device 5 of the first embodiment, illustrated in the flowchart of FIG. 3. Similarly, the reception device 6 of the third embodiment is configured such that the transmission block pattern generation unit 15 in the reception device 6 of the first embodiment illustrated in FIG. 6 is replaced with the transmission block pattern generation unit 15b. The overall flow of operation of the reception device 6 of the third embodiment is similar to the flow of operation of the reception device 6 of the first embodiment, illustrated in the flowchart of FIG. 7.

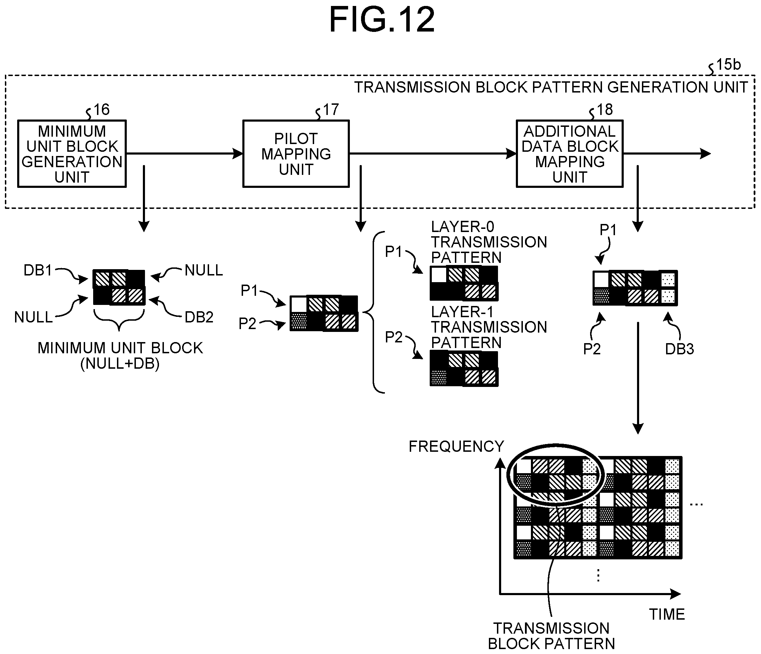

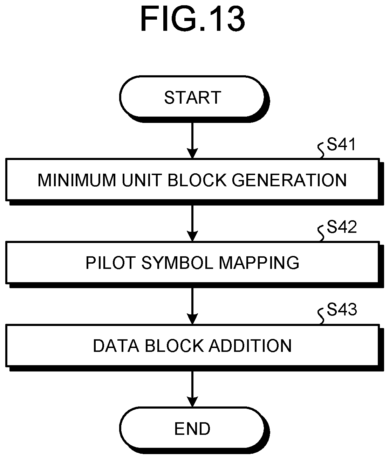

A configuration and an operation of the transmission block pattern generation unit 15b will now be described in detail. FIG. 12 is a diagram illustrating an example configuration of the transmission block pattern generation unit 15b according to the third embodiment, and an example of transmission block pattern generated by the transmission block pattern generation unit 15b. The transmission block pattern generation unit 15b includes the minimum unit block generation unit 16, the pilot mapping unit 17, and an additional data block mapping unit 18. FIG. 13 is a flowchart illustrating an operation of the transmission block pattern generation unit 15b according to the third embodiment. In FIG. 13, step S41 and step S42 are similar to step S11 and step S12 of the flowchart of the first embodiment illustrated in FIG. 5.

The transmission device 5 and the reception device 6 may have a need to generate a transmission block pattern in units of a specific time period, i.e., a specific number of OFDM symbols, or in units of a specific frequency range, i.e., a specific number of subcarriers. In such case, the additional data block mapping unit 18 adds a data block to generate a transmission block pattern having a desired size (step S43). In the example of FIG. 12, the additional data block mapping unit 18 adds one data block for two-layer SFBC to generate a transmission block pattern having units of two subcarriers×five OFDM symbols. That is, the transmission block pattern of the third embodiment is a third pattern that is generated by adding at least one data block to the first pattern without dividing of the minimum unit block.

The transmission device 5 performs subcarrier assignment based on information on the transmission block pattern including at least one data block added thereto, and the reception device 6 performs interference electrical power estimation, decoding, and the like based on information on the transmission block pattern including the at least one data block added thereto, thus to provide signal transmission.

Note that the transmission device 5 and the reception device 6 of the third embodiment have a hardware configuration similar to the hardware configuration of the transmission device 5 and of the reception device 6 of the first embodiment.

As described above, according to the present embodiment, the transmission device 5 and the reception device 6 form a frame using a transmission block pattern having an arbitrary size. Thus, the transmission device 5 and the reception device 6 can improve flexibility of the system as compared to the first embodiment.

### Fourth Embodiment.

A fourth embodiment uses a transmission block pattern that is generated by cyclically shifting the transmission block pattern generated as described in the third embodiment. Differences from the first through third embodiments will be described.

The transmission device 5 of the fourth embodiment is configured such that the transmission block pattern generation unit 15 in the transmission device 5 of the first embodiment illustrated in FIG. 2 is replaced with a transmission block pattern generation unit 15c. The overall flow of operation of the transmission device 5 of the fourth embodiment is similar to the flow of operation of the transmission device 5 of the first embodiment, illustrated in the flowchart of FIG. 3. Similarly, the reception device 6 of the fourth embodiment is configured such that the transmission block pattern generation unit 15 in the reception device 6 of the first embodiment illustrated in FIG. 6 is replaced with the transmission block pattern generation unit 15c. The overall flow of operation of the reception device 6 of the fourth embodiment is similar to the flow of operation of the reception device 6 of the first embodiment, illustrated in the flowchart of FIG. 7.

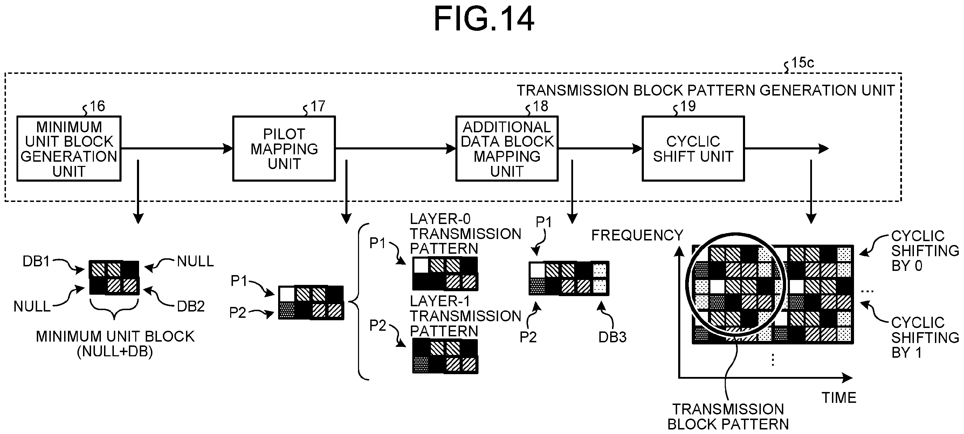

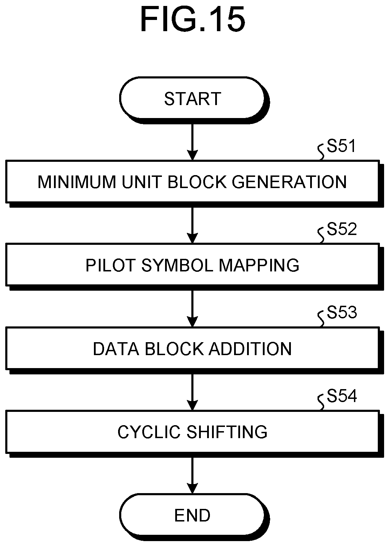

A configuration and an operation of the transmission block pattern generation unit 15c will now be described in detail. FIG. 14 is a diagram illustrating an example configuration of the transmission block pattern generation unit 15c according to the fourth embodiment, and an example of transmission block pattern generated by the transmission block pattern generation unit 15c. The transmission block pattern generation unit 15c includes the minimum unit block generation unit 16, the pilot mapping unit 17, the additional data block mapping unit 18, and the cyclic shift unit 19. FIG. 15 is a flowchart illustrating an operation of the transmission block pattern generation unit 15c according to the fourth embodiment. In FIG. 15, step S51 through step S53 are similar to step S41 through step S43 of the flowchart of the third embodiment illustrated in FIG. 13, and step S54 is similar to step S33 of the flowchart of the second embodiment illustrated in FIG. 11.

As described above, in the fourth embodiment, the transmission block pattern generation unit 15c adds a data block by the additional data block mapping unit 18, and then applies cyclic shifting by the cyclic shift unit 19. Specifically, in the example of FIG. 14, the transmission block pattern generation unit 15c adds one data block for two-layer SFBC to generate a pattern having units of two subcarriers×five OFDM symbols, and then combines a pattern cyclically shifted by an amount of 0 with a pattern cyclically shifted by an amount of 1 to generate a transmission block pattern of four subcarriers×five OFDM symbols. That is, the transmission block pattern of the fourth embodiment is a fourth pattern, which is a combination of the third pattern and a pattern generated by cyclic shifting of the third pattern in the temporal direction without dividing of the minimum unit block.

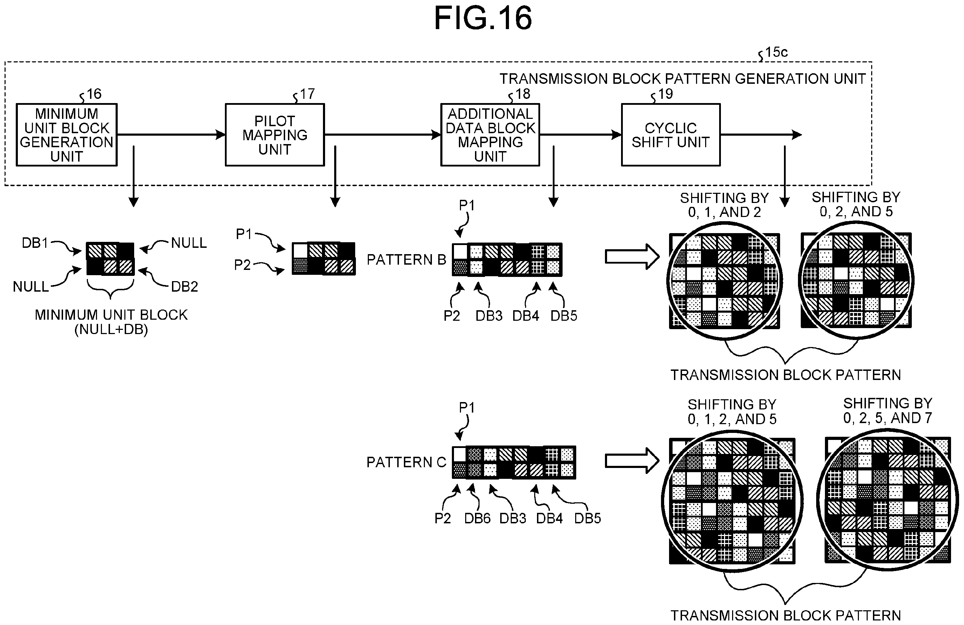

Note that the number of data blocks to be added by the additional data block mapping unit 18 is not limited to one as described above. FIG. 16 is a diagram illustrating the example configuration of the transmission block pattern generation unit 15c according to the fourth embodiment, and another example of transmission block pattern generated by the transmission block pattern generation unit 15c. The example of FIG. 16 illustrates different mappings of additional data blocks provided by the additional data block mapping unit 18. Designating the foregoing transmission block pattern of FIG. 14 as pattern A, pattern B illustrated in FIG. 16 includes three data blocks (DB3, DB4, and DB5) for two-layer SFBC being added as the additional data blocks. In addition, pattern C illustrated in FIG. 16 includes four data blocks (DB3, DB4, DB5, and DB6) for two-layer SFBC being added as the additional data blocks. A restricting condition in applying cyclic shifting in the cyclic shift unit 19 is, as described above, no dividing of the minimum unit block. Additional data blocks can be separated, so that applicability in terms of the amount of shift in cyclic shifting can be increased.

FIG. 16 illustrates pattern B as forming a transmission block pattern that is a combination of patterns cyclically shifted by amounts of 0, 1, and 2, and as forming a transmission block pattern that is a combination of patterns cyclically shifted by amounts of 0, 2, and 5, generated by the transmission block pattern generation unit 15c. In either case, the transmission block pattern generation unit 15c generates a transmission block pattern of six subcarriers×seven OFDM symbols. In addition, FIG. 16 illustrates pattern C as forming a transmission block pattern that is a combination of patterns cyclically shifted by amounts of 0, 1, 2, and 5, and as forming a transmission block pattern that is a combination of patterns cyclically shifted by amounts of 0, 2, 5, and 7, generated by the transmission block pattern generation unit 15c. In either case, the transmission block pattern generation unit 15c generates a transmission block pattern of eight subcarriers×eight OFDM symbols. The transmission block pattern generated by the transmission block pattern generation unit 15c is not limited to the transmission block patterns of these examples illustrated in FIGs. 14 and 16.

The transmission device 5 performs subcarrier assignment based on information on the transmission block pattern including at least one data block added thereto and cyclically shifted, and the reception device 6 performs interference electrical power estimation, decoding, and the like based on information on the transmission block pattern including the at least one data block thereto and cyclically shifted, thus to provide signal transmission.

Note that the transmission device 5 and the reception device 6 of the fourth embodiment have a hardware configuration similar to the hardware configuration of the transmission device 5 and of the reception device 6 of the first embodiment.

As described above, according to the present embodiment, the transmission device 5 and the reception device 6 use a transmission block pattern obtained by forming a frame using a transmission block pattern having an arbitrary size, and cyclically shifting the frame. Thus, the transmission device 5 and the reception device 6 can improve flexibility of the system, and can cause the position of the null symbol to be randomized to improve interference immunity.

### Fifth Embodiment.

In a fifth embodiment, the transmission block pattern generation unit generates multiple transmission block patterns. Differences from the first through fourth embodiments will be described.

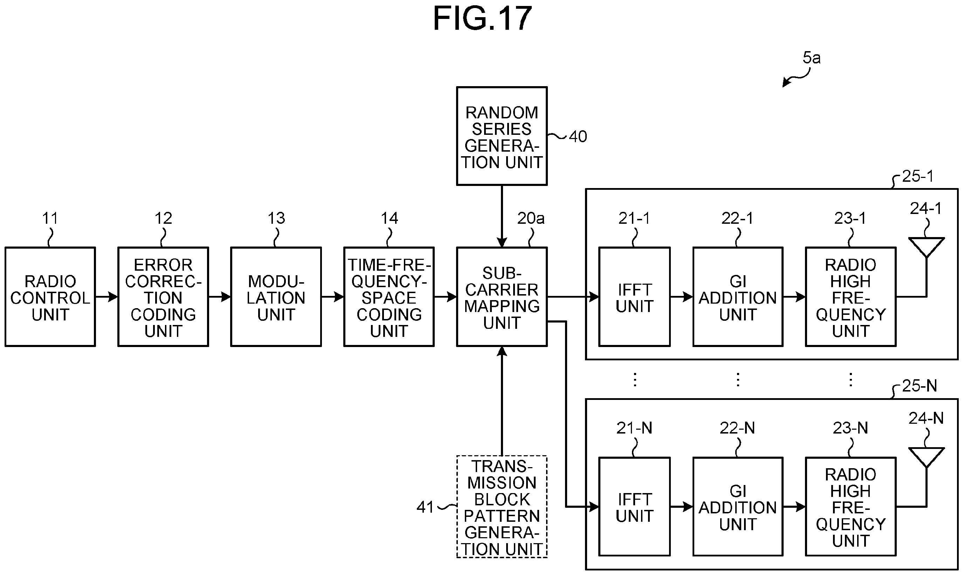

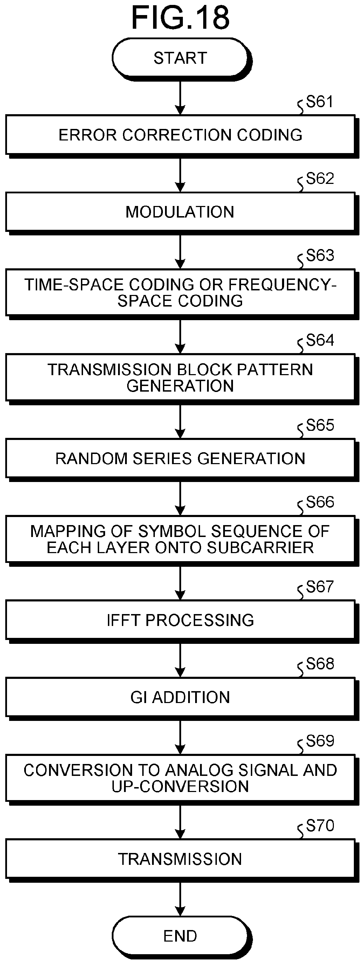

A configuration and an operation of the transmission device will first be described. FIG. 17 is a block diagram illustrating an example configuration of a transmission device 5a according to the fifth embodiment. FIG. 18 is a flowchart illustrating an operation of the transmission device 5a according to the fifth embodiment. The transmission device 5a corresponds to the base station 1 of the wireless communication system 4 described above. The transmission device 5a is configured such that the transmission block pattern generation unit 15 and the subcarrier mapping unit 20 are removed from the transmission device 5 of the first embodiment illustrated in FIG. 2, and a random series generation unit 40, a transmission block pattern generation unit 41, and a subcarrier mapping unit 20a are added. The random series generation unit 40 and the transmission block pattern generation unit 41 are connected to the subcarrier mapping unit 20a.

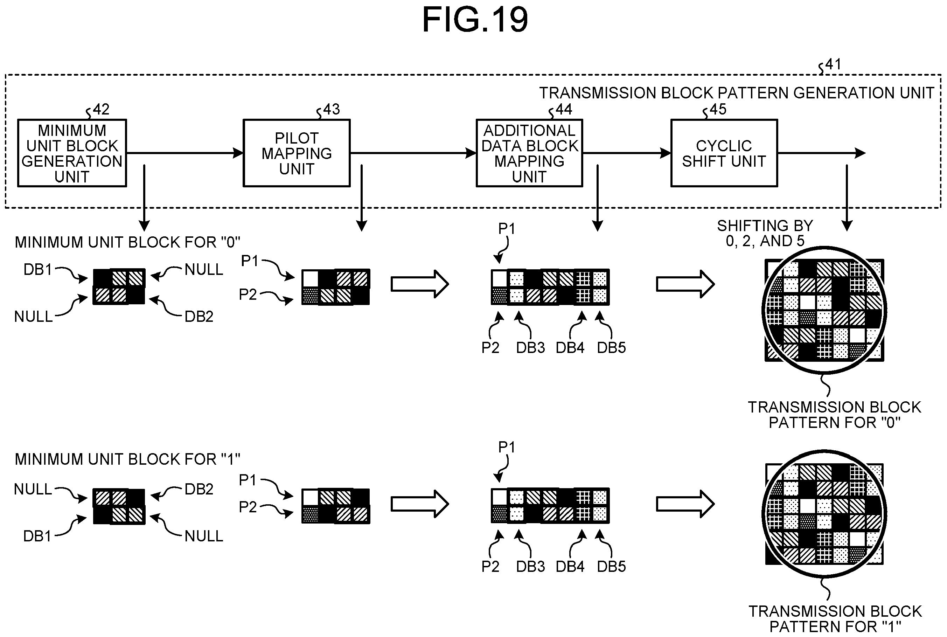

In FIG. 18, step S61 through step S63 are similar to step S1 through step S3 of the flowchart of the first embodiment illustrated in FIG. 3. The transmission block pattern generation unit 41 generates transmission block patterns having different patterns for multiple respective series (step S64). A configuration and an operation of the transmission block pattern generation unit 41 will next be described in detail. FIG. 19 is a diagram illustrating an example configuration of the transmission block pattern generation unit 41 according to the fifth embodiment, and an example of transmission block patterns generated by the transmission block pattern generation unit 41. The transmission block pattern generation unit 41 includes a minimum unit block generation unit 42, a pilot mapping unit 43, an additional data block mapping unit 44, and a cyclic shift unit 45. The minimum unit block generation unit 42, the pilot mapping unit 43, the additional data block mapping unit 44, and the cyclic shift unit 45 operate to generate transmission block patterns for multiple respective series, but the operation of generation of each of the transmission block patterns is similar to the operation of the minimum unit block generation unit 16, of the pilot mapping unit 17, of the additional data block mapping unit 18, and of the cyclic shift unit 19 of the fourth embodiment.

The minimum unit block generation unit 42 generates a minimum unit block for series "0" and a minimum unit block for series "1". This operation assumes that the two minimum unit blocks have structures of the same size in the time-frequency domain, having the same number of data blocks, and having the same number of null symbols, but having null symbols at positions different from each other.

The pilot mapping unit 43 places the pilot symbols P1 and P2 for synchronization detection on each of the two minimum unit blocks generated by the minimum unit block generation unit 42. The pilot mapping unit 43 may change the association of the pilots with the layer for each layer as long as the pilot symbols are mapped to the same positions. For example, in the example of FIG. 19, the pilot mapping unit 43 maps the pilot symbol P1 to a higher frequency and the pilot symbol P2 to a lower frequency in both of the minimum unit block for series "0" and the minimum unit block for series "1". Instead, the pilot symbol P1 may be mapped to a lower frequency and the pilot symbol P2 may be mapped to a higher frequency in the minimum unit block for series "1".

The additional data block mapping unit 44 additionally maps a data block onto each of the patterns including the pilot symbols P1 and P2 having been mapped by the pilot mapping unit 43. In the example of FIG. 19, the additional data block mapping unit 44 adds three data blocks (DB3, DB4, and DB5) for two-layer SFBC, which are added to the same positions in the pattern for series "0" and in the pattern for series "1".

The cyclic shift unit 45 cyclically shifts, in the temporal direction, each of the patterns generated by the additional data block mapping performed by the additional data block mapping unit 44, and combines multiple cyclically-shifted patterns to generate a transmission block pattern. In the example of FIG. 19, the cyclic shift unit 45 combines patterns cyclically shifted by amounts of 0, 2, and 5 to generate a transmission block pattern. Thus, the transmission block pattern generation unit 41 generates a transmission block pattern of six subcarriers×seven OFDM symbols.

The transmission block patterns generated by the transmission block pattern generation unit 41 are characterized in having the null symbols for series "0" and the null symbols for series "1" being mapped to different positions even upon generation of patterns having an arbitrary size. Note that in cyclic shifting, division of the minimum unit block is not permitted similarly to the fourth embodiment and the like.

Returning to description of FIG. 18, the random series generation unit 40 generates a random series (step S65). The random series generation unit 40 generates, for example, a pseudorandom series of "0" and "1". The random series generation unit 40 may generate a specific signal sequence.

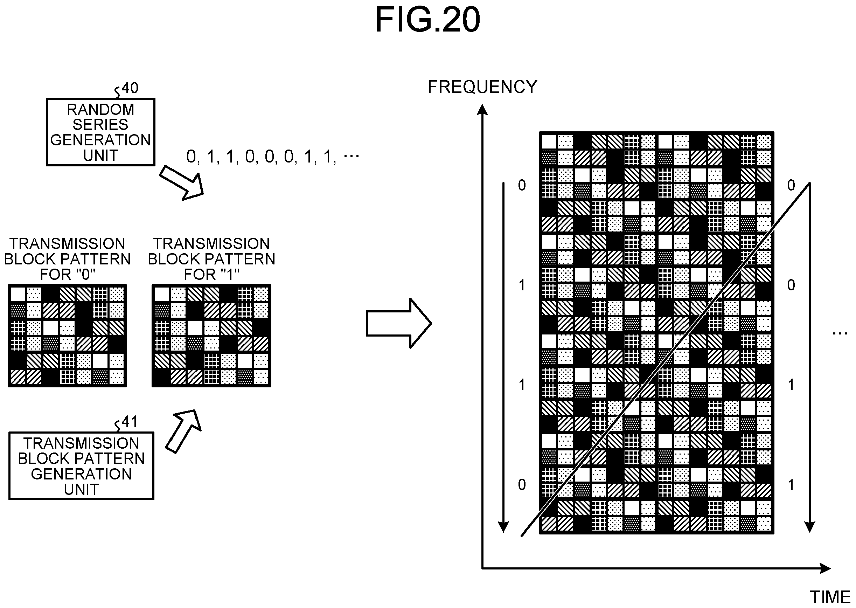

The subcarrier mapping unit 20a arranges the transmission block pattern for series "0" and the transmission block pattern for series "1" generated by the transmission block pattern generation unit 41, based on the random series received from the random series generation unit 40. That is, the subcarrier mapping unit 20a places a corresponding transmission block pattern of the multiple transmission block patterns in the temporal direction or in the frequency direction based on the random series or on the specific signal sequence. The subcarrier mapping unit 20a maps a sequence of symbols of each layer onto a subcarrier according to the transmission block patterns (step S66). FIG. 20 is a diagram illustrating an example arrangement of transmission block patterns performed by the subcarrier mapping unit 20a according to the fifth embodiment. FIG. 20 illustrates an example in which the subcarrier mapping unit 20a deploys and arranges the transmission block patterns each of six subcarriers×seven OFDM symbols in a 24-subcarrier system. The example of FIG. 20 arranges the transmission block patterns prioritizing the frequency direction, but may arrange the transmission block patterns prioritizing the temporal direction.

The subsequent operation of the transmission device 5a, i.e., the operation from step S67 to step S70 of the flowchart of FIG. 18, is similar to the operation from step S6 to step S9 of the flowchart of the first embodiment illustrated in FIG. 3.

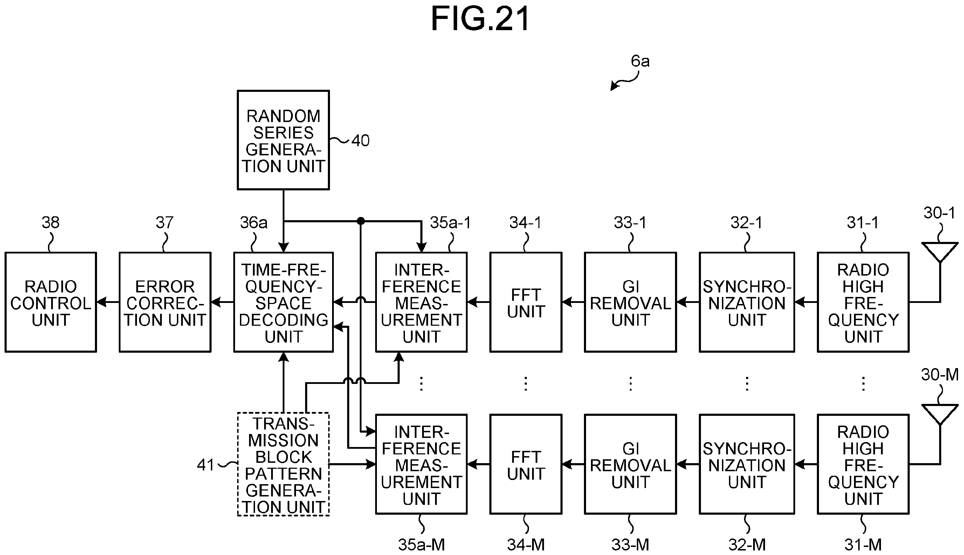

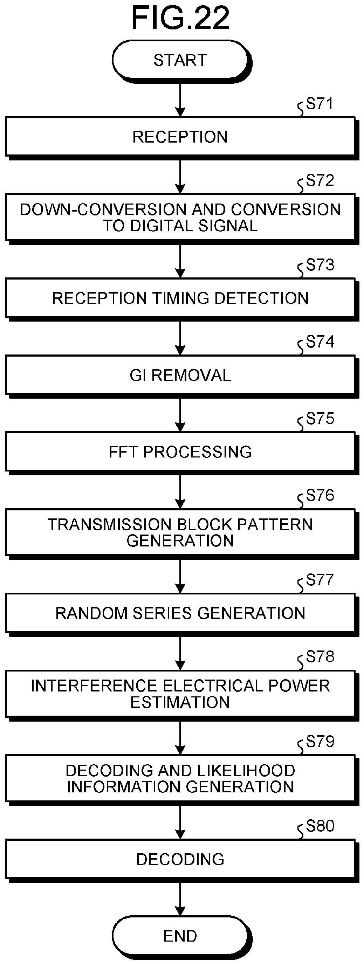

A configuration and an operation of the reception device will next be described. FIG. 21 is a block diagram illustrating an example configuration of a reception device 6a according to the fifth embodiment. FIG. 22 is a flowchart illustrating an operation of the reception device 6a according to the fifth embodiment. The reception device 6a corresponds to the mobile station 3 of the wireless communication system 4 described above. That is, the reception device 6a forms the wireless communication system 4 with the transmission device 5a, and receives a signal transmitted from the transmission device 5a. The reception device 6a is configured such that the transmission block pattern generation unit 15, the interference measurement units 35-1 to 35-M, and the time-frequency-space decoding unit 36 are removed from the reception device 6 of the first embodiment illustrated in FIG. 6, and the random series generation unit 40, the transmission block pattern generation unit 41, interference measurement units 35a-1 to 35a-M, and a time-frequency-space decoding unit 36a are added. The random series generation unit 40 and the transmission block pattern generation unit 41 are connected to the interference measurement units 35a-1 to 35a-M and to the time-frequency-space decoding unit 36a.

In FIG. 22, step S71 through step S75 are similar to step S21 through step S25 of the flowchart of the first embodiment illustrated in FIG. 7. The transmission block pattern generation unit 41 generates transmission block patterns having different patterns for multiple respective series (step S76). The random series generation unit 40 generates a random series (step S77). The transmission block pattern generation unit 41 and the random series generation unit 40 operate similarly to the transmission block pattern generation unit 41 and to the random series generation unit 40 of the transmission device 5a described above. Thus, performing similar operations by the transmission device 5a and by the reception device 6a allows a seed for random series generation to be shared therebetween, and enables the same subcarrier arrangement information to be obtained.

The interference measurement units 35a-1 to 35a-M each obtain the subcarrier arrangement information same as that of the transmission device 5a from the random series obtained from the random series generation unit 40, and from the transmission block pattern for series "0" and the transmission block pattern for series "1" generated by the transmission block pattern generation unit 41. The interference measurement units 35a-1 to 35a-M obtain the position of a null for interference measurement, i.e., the position of a null subcarrier, based on the subcarrier arrangement information same as that of the transmission device 5a, and estimate interference electrical power at the position of a subcarrier that transmits a nearby data block, from the received-power value of that null subcarrier (step S78).

Similarly, the time-frequency-space decoding unit 36a is a decoding unit that decodes the reception signal into a data block based on the subcarrier arrangement information. The time-frequency-space decoding unit 36a generates a weighted combination of information that is based on the reception signals received by the multiple antennas 30-1 to 30-M, based on the pieces of information on interference electrical power respectively estimated by the interference measurement units 35a-1 to 35a-M, and generates likelihood information on a per-symbol or per-bit basis (step S79). That is, the time-frequency-space decoding unit 36a generates likelihood information on each symbol based on information on interference electrical power. The subsequent operation of the reception device 6a, i.e., the operation at step S80 of the flowchart of FIG. 22, is similar to the operation at step S29 of the flowchart of the first embodiment illustrated in FIG. 7.

Note that the transmission device 5a and the reception device 6a of the fifth embodiment have a hardware configuration similar to the hardware configuration of the transmission device 5 and of the reception device 6 of the first embodiment.

As described above, according to the present embodiment, the transmission device 5a and the reception device 6a are capable of changing the position of a null subcarrier for interference measurement based on a random series. In the multi-cell wireless communication system 4 illustrated in FIG. 1, sharing of a transmission block pattern between the cells 2 enables inter-cell 2 interference to be easily measured by changing the random series between the cells 2. Thus, the transmission device 5a and the reception device 6a can improve transmission characteristics even in a severe wireless environment subjected to inter-cell 2 interference.

Note that although the present embodiment has been described in the context of a configuration corresponding to the fourth embodiment by way of example, the present embodiment is also applicable to configurations corresponding to the second embodiment and to the third embodiment that do not use some of the functionality. In addition, the present embodiment has been described assuming that two types of transmission block patterns, i.e., those for series "0" and for series "1", are selectively arranged, but the number of types of the transmission block pattern is not limited to two. Use of multivalued information by combining multiple bits of signal from the random series generation unit 40 will enable an arbitrary number of types, e.g., four types or eight types, of transmission block patterns to be selectively arranged.

### Sixth Embodiment.

In the fifth embodiment and the like, cyclic shifting is applied in the temporal direction to generate a transmission block pattern. In a sixth embodiment, cyclic shifting is applied in the frequency direction to generate a transmission block pattern.

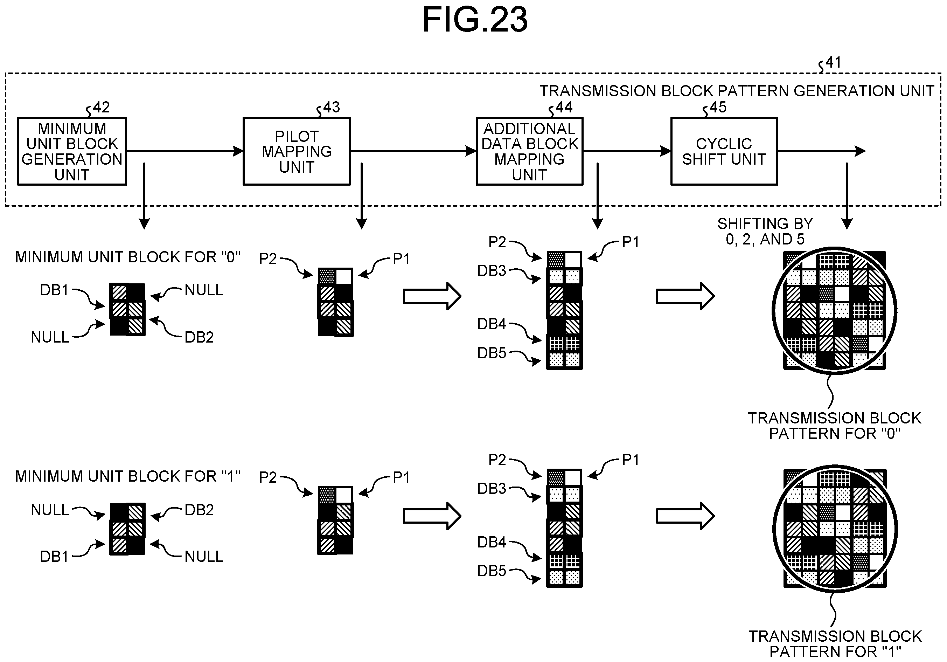

The transmission device 5a of the sixth embodiment is configured similarly to the transmission device 5a of the fifth embodiment illustrated in FIG. 17. In addition, the reception device 6a of the sixth embodiment is configured similarly to the reception device 6a of the fifth embodiment illustrated in FIG. 21. FIG. 23 is a diagram illustrating an example configuration of the transmission block pattern generation unit 41 according to the sixth embodiment, and an example of transmission block patterns generated by the transmission block pattern generation unit 41.

The minimum unit block generation unit 42 generates a minimum unit block having a configuration of three subcarriers×two OFDM symbols. The pilot mapping unit 43 places the pilot symbols P1 and P2 for synchronization detection in the frequency direction of the minimum unit block. The additional data block mapping unit 44 adds three data blocks (DB3, DB4, and DB5) for two-layer STBC. The cyclic shift unit 45 cyclically shifts, in the frequency direction, each of the patterns generated by the additional data block mapping performed by the additional data block mapping unit 44, and combines multiple cyclically-shifted patterns to generate a transmission block pattern. In the example of FIG. 23, the cyclic shift unit 45 combines patterns cyclically shifted by amounts of 0, 2, and 5 to generate a transmission block pattern. Thus, the transmission block pattern generation unit 41 generates a transmission block pattern of seven subcarriers×six OFDM symbols. Note that in cyclic shifting, division of the minimum unit block is not permitted similarly to the fifth embodiment and the like.

Specifically, application of the operation of the sixth embodiment to the operation of the second embodiment will cause a transmission block pattern of the second embodiment to be a second pattern that is a combination of the first pattern and a pattern generated by cyclic shifting of the first pattern in the frequency direction without dividing of the minimum unit block.
Similarly, application of the operation of the sixth embodiment to the operation of the fourth embodiment will cause a transmission block pattern of the fourth embodiment to be a fourth pattern that is a combination of the third pattern and a pattern generated by cyclic shifting of the third pattern in the temporal direction or in the frequency direction without dividing of the minimum unit block.

Note that the transmission device 5a and the reception device 6a of the sixth embodiment have a hardware configuration similar to the hardware configuration of the transmission device 5 and of the reception device 6 of the first embodiment.

As described above, according to the present embodiment, the transmission device 5a and the reception device 6a generate a transmission block pattern cyclically shifted in the frequency direction. Thus, the transmission device 5a and the reception device 6a can further improve flexibility of system design.

The configurations described in the foregoing embodiments are merely examples of various aspects of the present invention. These configurations may be combined with a known other technology, and moreover, a part of such configurations may be omitted and/or modified.

### Reference Signs List

1-a to 1-c base station; 2-a to 2-c cell; 3-a to 3-c mobile station; 4 wireless communication system; 5, 5a transmission device; 6, 6a reception device; 11, 38 radio control unit; 12 error correction coding unit; 13 modulation unit; 14 time-frequency-space coding unit; 15, 15a, 15b, 15c, 41 transmission block pattern generation unit; 16, 42 minimum unit block generation unit; 17, 43 pilot mapping unit; 18, 44 additional data block mapping unit; 19, 45 cyclic shift unit; 20, 20a subcarrier mapping unit; 21-1 to 21-N IFFT unit; 22-1 to 22-N GI addition unit; 23-1 to 23-N, 31-1 to 31-M radio high frequency unit; 24-1 to 24-N, 30-1 to 30-M antenna; 25-1 to 25-N transmission processing unit; 32-1 to 32-M synchronization unit; 33-1 to 33-M GI removal unit; 34-1 to 34-M FFT unit; 35-1 to 35-M, 35a-1 to 35a-M interference measurement unit; 36, 36a time-frequency-space decoding unit; 37 error correction unit; 40 random series generation unit.

## Claims

1. A transmission device (5a) comprising:
a coding unit (14) configured to perform coding on a sequence of modulated symbols using space-time block coding or space-frequency block coding to generate sequences of symbols for a plurality of layers;
a transmission block pattern generation unit (41) configured to generate, on a per-layer basis, a transmission block pattern including at least one unit block, the unit block including at least one data block formed of resources arranged consecutively in a temporal direction or in a frequency direction and a null symbol;
a subcarrier mapping unit (20a) configured to deploy the transmission block pattern in a repeating arrangement in the temporal direction and in the frequency direction, and to map the sequences of symbols for a plurality of layers onto subcarriers; and
a plurality of transmission processing units (25) configured to transmit a plurality of signals as mapped by the subcarrier mapping unit (20a), wherein
the transmission block pattern is a second pattern that is a combination of a first pattern and a pattern generated by cyclic shifting of the first pattern in the temporal direction or in the frequency direction without dividing of the unit block, the first pattern being a combination of the unit block and a pilot symbol for each of the layers;
**characterized by** further comprising:
a random series generation unit (40) configured to generate a random series or a specific signal sequence, wherein
the transmission block pattern generation unit (41) is configured to generate a plurality of transmission block patterns having different patterns, and
the subcarrier mapping unit (20a) is configured to place a corresponding transmission block pattern of the plurality of transmission block patterns in the temporal direction or in the frequency direction based on the random series or on the specific signal sequence.

2. A reception device (6a) for receiving a signal transmitted from the transmission device (5a) according to claim 1, the reception device (6a) comprising:
a transmission block pattern generation unit (41) having the same functionality as the transmission block pattern generation unit (41) included in the transmission device of claim 1 (5a);
an interference measurement unit (35a) configured to estimate interference electrical power for a null subcarrier based on the transmission block pattern generated by the transmission block pattern generation unit (41), using a reception signal of a signal transmitted from the transmission device (5a), the null subcarrier being a subcarrier onto which a null symbol is mapped; and
a decoding unit (36a) configured to decode the reception signal into a data block based on the transmission block pattern to generate likelihood information on each symbol based on information on the interference electrical power;
**characterized by** further comprising:
a random series generation unit (40) configured to generate a random series or a specific signal sequence, wherein
the transmission block pattern generation unit (41) is configured to generate a plurality of transmission block patterns having different patterns,
the interference measurement unit (35a) is configured to estimate the interference electrical power by identifying a position of the null subcarrier based on the plurality of transmission block patterns being placed based on the random series or on the specific signal sequence, and
the decoding unit (36a) is configured to decode the reception signal into a data block based on the plurality of transmission block patterns being placed based on the random series or on the specific signal sequence, and and to generate the likelihood information on each symbol based on the information on the interference electrical power.

3. A wireless communication system (4) comprising:
the transmission device (5a) according to claim 1 and the reception device (6a) according to claim 2.

4. A method for controlling a transmission device (5a) that transmits a plurality of signals, comprising:
coding on a sequence of modulated symbols using space-time block coding or space-frequency block coding to generate sequences of symbols for a plurality of layers;
generating, on a per-layer basis, a transmission block pattern including at least one unit block, the unit block including at least one data block formed of resources arranged consecutively in a temporal direction or in a frequency direction and a null symbol;
deploying the transmission block pattern in a repeating arrangement in the temporal direction and in the frequency direction, and mapping the sequences of symbols for a plurality of layers onto subcarriers; and
transmitting a plurality of signals as mapped, wherein
the transmission block pattern is a second pattern that is a combination of a first pattern and a pattern generated by cyclic shifting of the first pattern in the temporal direction or in the frequency direction without dividing of the unit block, the first pattern being a combination of the unit block and a pilot symbol for each of the layers;
**characterized by**:
generating a random series or a specific signal sequence,
generating a plurality of transmission block patterns having different patterns, and
placing a corresponding transmission block pattern of the plurality of transmission block patterns in the temporal direction or in the frequency direction based on the random series or on the specific signal sequence.

5. A method for controlling a reception device (6a) that receives a signal transmitted from the transmission device (5a) according to claim 1, comprising:
generating, on a per-layer basis, a transmission block pattern as defined in claim 1;
estimating interference electrical power for a null subcarrier based on the transmission block pattern using a reception signal of a signal transmitted from the transmission device (5a), the null subcarrier being a subcarrier onto which a null symbol is mapped; and
decoding the reception signal into a data block based on the transmission block pattern to generate likelihood information on each symbol based on information on the interference electrical power;
**characterized in that** the method further comprises generating a random series or a specific signal sequence,
generating a plurality of transmission block patterns having different patterns,
estimating the interference electrical power by identifying a position of the null subcarrier based on the plurality of transmission block patterns being placed based on the random series or on the specific signal sequence, and
decoding the reception signal into a data block based on the plurality of transmission block patterns being placed based on the random series or on the specific signal sequence, and generating the likelihood information on each symbol based on the information on the interference electrical power.

6. A program storage medium storing a program that controls a transmission device (5a) that transmits a plurality of signals, the program causing the transmission device (5a) to perform:
coding on a sequence of modulated symbols using space-time block coding or space-frequency block coding to generate sequences of symbols for a plurality of layers;
generating, on a per-layer basis, a transmission block pattern including at least one unit block, the unit block including at least one data block formed of resources arranged consecutively in a temporal direction or in a frequency direction and a null symbol;
deploying the transmission block pattern in a repeating arrangement in the temporal direction and in the frequency direction, and mapping the sequences of symbols for a plurality of layers onto subcarriers; and
transmitting a plurality of signals as mapped, wherein
the transmission block pattern is a second pattern that is a combination of a first pattern and a pattern generated by cyclic shifting of the first pattern in the temporal direction or in the frequency direction without dividing of the unit block, the first pattern being a combination of the unit block and a pilot symbol for each of the layers;
**characterized by**:
generating a random series or a specific signal sequence,
generating a plurality of transmission block patterns having different patterns, and
placing a corresponding transmission block pattern of the plurality of transmission block patterns in the temporal direction or in the frequency direction based on the random series or on the specific signal sequence.

7. A program storage medium storing a program that controls a reception device (6a) that receives a signal transmitted from the transmission device (5a) according to claim 1, the program causing the reception device (6a) to perform:
generating, on a per-layer basis, a transmission block pattern as defined in claim 1;
estimating interference electrical power for a null subcarrier based on the transmission block pattern using a reception signal of a signal transmitted from the transmission device (5a), the null subcarrier being a subcarrier onto which a null symbol is mapped; and
decoding the reception signal into a data block based on the transmission block pattern to generate likelihood information on each symbol based on information on the interference electrical power;
**characterized by**:
generating a random series or a specific signal sequence,
generating a plurality of transmission block patterns having different patterns,
estimating the interference electrical power by identifying a position of the null subcarrier based on the plurality of transmission block patterns being placed based on the random series or on the specific signal sequence, and
decoding the reception signal into a data block based on the plurality of transmission block patterns being placed based on the random series or on the specific signal sequence, and generating the likelihood information on each symbol based on the information on the interference electrical power.

## Patentansprüche

1. Übertragungseinrichtung (5a), umfassend:
eine Kodiereinheit (14), die ausgelegt ist, eine Kodierung einer Folge modulierter Symbole unter Verwendung von Raum-Zeit-Blockkodierung oder Raum-Frequenz-Blockkodierung, um Symbolfolgen für eine Vielzahl von Schichten zu generieren, durchzuführen;
eine Übertragungsblockmuster-Generierungseinheit (41), die ausgelegt ist, auf einer Pro-Schicht-Basis ein Übertragungsblockmuster zu generieren, das mindestens einen Einheitsblock enthält, wobei der Einheitsblock mindestens einen Datenblock, der aus Ressourcen gebildet ist, die in einer zeitlichen Richtung oder in einer Frequenzrichtung konsekutiv angeordnet sind, und ein Nullsymbol enthält;
eine Subträger-Mappingeinheit (20a), die ausgelegt ist, das Übertragungsblockmuster in einer sich wiederholenden Anordnung in der zeitlichen Richtung und in der Frequenzrichtung einzusetzen und die Symbolfolgen für eine Vielzahl von Schichten auf Subträger zu mappen; und
eine Vielzahl von Übertragungsverarbeitungseinheiten (25), die ausgelegt sind, eine Vielzahl von Signalen als von der Subträger-Mappingeinheit (20a) gemappt zu übertragen, wobei
das Übertragungsblockmuster ein zweites Muster ist, das eine Kombination aus einem ersten Muster und einem Muster ist, das durch zyklische Verschiebung des ersten Musters in der zeitlichen Richtung oder in der Frequenzrichtung ohne Unterteilung des Einheitsblocks generiert wird, wobei das erste Muster eine Kombination aus dem Einheitsblock und einem Pilotsymbol für jede der Schichten ist;
**dadurch gekennzeichnet**, ferner zu umfassen:
eine Zufallsreihe-Generierungseinheit (40), die ausgelegt ist, eine Zufallsreihe oder eine spezifische Signalfolge zu generieren, wobei
die Übertragungsblockmuster-Generierungseinheit (41) ausgelegt ist, eine Vielzahl von Übertragungsblockmustern mit unterschiedlichen Mustern zu generieren, und
die Subträger-Mappingeinheit (20a) eingerichtet ist, ein entsprechendes Übertragungsblockmuster der Vielzahl von Übertragungsblockmustern in der zeitlichen Richtung oder in der Frequenzrichtung auf der Grundlage der Zufallsreihe oder der spezifischen Signalfolge zu platzieren.

2. Empfangseinrichtung (6a) zum Empfangen eines Signals, das von der Übertragungseinrichtung (5a) nach Anspruch 1 übertragen wird, wobei die Empfangseinrichtung (6a) umfasst:
eine Übertragungsblockmuster-Generierungseinheit (41) mit der gleichen Funktionalität wie die Übertragungsblockmuster-Generierungseinheit (41), die in der Übertragungseinrichtung (5a) nach Anspruch 1 enthalten ist;
eine Interferenzmesseinheit (35a), die ausgelegt ist, die elektrische Interferenzleistung für einen Null-Subträger auf der Grundlage des von der Übertragungsblockmuster-Generierungseinheit (41) generierten Übertragungsblockmusters unter Verwendung eines Empfangssignals eines von der Übertragungseinrichtung (5a) übertragenen Signals zu schätzen, wobei der Null-Subträger ein Subträger ist, auf den ein Null-Symbol gemappt wird; und
eine Dekodiereinheit (36a), die ausgelegt ist, das Empfangssignal in einen Datenblock auf der Grundlage des Übertragungsblockmusters zu dekodieren, um Likelihood-Informationen über jedes Symbol auf der Grundlage von Informationen über die elektrische Interferenzleistung zu generieren; **dadurch gekennzeichnet**, ferner zu umfassen:
eine Zufallsreihe-Generierungseinheit (40), die ausgelegt ist, eine Zufallsreihe oder eine spezifische Signalfolge zu generieren, wobei
die Übertragungsblockmuster-Generierungseinheit (41) ausgelegt ist, eine Vielzahl von Übertragungsblockmustern mit unterschiedlichen Mustern zu generieren,
die Subträger-Mappingeinheit (35a) ausgelegt ist, die elektrische Interferenzleistung durch Identifizieren einer Position des Null-Subträgers auf der Grundlage der Vielzahl von Übertragungsblockmustern, die auf der Grundlage der Zufallsreihe oder der spezifischen Signalfolge platziert werden, zu schätzen, und
die Dekodiereinheit (36a) ausgelegt ist, das Empfangssignal in einen Datenblock zu dekodieren, auf der Grundlage der Vielzahl von Übertragungsblockmustern, die auf der Grundlage der Zufallsreihe oder der spezifischen Signalsequenz platziert sind, und um die Likelihood-Informationen über jedes Symbol auf der Grundlage der Informationen über die elektrische Interferenzleistung zu generieren.

3. Drahtlos-Kommunikationssystem (4), umfassend:
die Übertragungseinrichtung (5a) nach Anspruch 1 und die Empfangseinrichtung (6a) nach Anspruch 2.

4. Verfahren zur Steuerung einer Übertragungseinrichtung (5a), die eine Vielzahl von Signalen überträgt, umfassend:
Kodieren einer Folge modulierter Symbole unter Verwendung von Raum-Zeit-Blockkodierung oder Raum-Frequenz-Blockkodierung, um Symbolfolgen für eine Vielzahl von Schichten zu generieren;
Generieren, auf einer Pro-Schicht-Basis eines Übertragungsblockmusters, das mindestens einen Einheitsblock enthält, wobei der Einheitsblock mindestens einen Datenblock, der aus Ressourcen gebildet ist, die in einer zeitlichen Richtung oder in einer Frequenzrichtung konsekutiv angeordnet sind, und ein Nullsymbol enthält;
Einsetzen des Übertragungsblockmusters in einer sich wiederholenden Anordnung in der zeitlichen Richtung und in der Frequenzrichtung und Mappen der Symbolfolgen für eine Vielzahl von Schichten auf Subträger; und
Übertragen einer Vielzahl von Signalen als gemappt, wobei
das Übertragungsblockmuster ein zweites Muster ist, das eine Kombination aus einem ersten Muster und einem Muster ist, das durch zyklische Verschiebung des ersten Musters in der zeitlichen Richtung oder in der Frequenzrichtung ohne Unterteilung des Einheitsblocks generiert wird, wobei das erste Muster eine Kombination aus dem Einheitsblock und einem Pilotsymbol für jede der Schichten ist;
**gekennzeichnet durch**:
Generieren einer Zufallsreihe oder einer spezifischen Signalfolge,
Generieren einer Vielzahl von Übertragungsblockmustern mit unterschiedlichen Mustern, und
Platzieren eines entsprechenden Übertragungsblockmusters der Vielzahl von Übertragungsblockmustern in der zeitlichen Richtung oder in der Frequenzrichtung auf der Grundlage der Zufallsreihe oder der spezifischen Signalsequenz.

5. Verfahren zum Steuern einer Empfangseinrichtung (6a), die ein von der Übertragungseinrichtung (5a) nach Anspruch 1 übertragenes Signal empfängt, umfassend:
Generieren, auf einer Pro-Schicht-Basis eines in Anspruch 1 definierten Übertragungsblockmusters;
Schätzen einer elektrischen Interferenzleistung für einen Null-Subträger auf der Grundlage des Übertragungsblockmusters unter Verwendung eines Empfangssignals eines von der Übertragungseinrichtung (5a) übertragenen Signals, wobei der Null-Subträger ein Subträger ist, auf den ein Nullsymbol gemappt wird; und
Dekodieren des Empfangssignals in einen Datenblock auf der Grundlage des Übertragungsblockmusters, um Likelihood-Informationen über jedes Symbol auf der Grundalge von Informationen über die elektrische Interferenzleistung zu generieren;
**dadurch gekennzeichnet, dass** das Verfahren ferner umfasst:
Generieren einer Zufallsreihe oder einer spezifischen Signalfolge,
Generieren einer Vielzahl von Übertragungsblockmustern mit unterschiedlichen Mustern,
Schätzen der elektrischen Interferenzleistung durch Identifizieren einer Position des Null-Subträgers auf der Grundlage der Vielzahl von Übertragungsblockmustern, die auf der Grundlage der Zufallsreihe oder der spezifischen Signalsequenz platziert werden, und
Dekodieren des Empfangssignals in einen Datenblock auf der Grundlage der Vielzahl von Übertragungsblockmustern, die auf der Grundlage der Zufallsreihe oder der spezifischen Signalsequenz platziert werden, und Generieren der Likelihood-Informationen über jedes Symbol auf der Grundlage der Informationen über die elektrische Interferenzleistung.

6. Programmspeichermedium, das ein Programm speichert, das eine Übertragungseinrichtung (5a) steuert, die eine Vielzahl von Signalen überträgt, wobei das Programm die Übertragungseinrichtung (5a) veranlasst, durchzuführen:
Kodieren einer Folge modulierter Symbole unter Verwendung von Raum-Zeit-Blockkodierung oder Raum-Frequenz-Blockkodierung, um Symbolfolgen für eine Vielzahl von Schichten zu generieren;
Generieren, auf einer Pro-Schicht-Basis eines Übertragungsblockmusters, das mindestens einen Einheitsblock enthält, wobei der Einheitsblock mindestens einen Datenblock, der aus Ressourcen gebildet ist, die in einer zeitlichen Richtung oder in einer Frequenzrichtung konsekutiv angeordnet sind, und ein Nullsymbol enthält;
Einsetzen des Übertragungsblockmusters in einer sich wiederholenden Anordnung in der zeitlichen Richtung und in der Frequenzrichtung und Mappen der Symbolfolgen für eine Vielzahl von Schichten auf Subträger; und
Übertragen einer Vielzahl von Signalen als gemappt, wobei
das Übertragungsblockmuster ein zweites Muster ist, das eine Kombination aus einem ersten Muster und einem Muster ist, das durch zyklische Verschiebung des ersten Musters in der zeitlichen Richtung oder in der Frequenzrichtung ohne Unterteilung des Einheitsblocks generiert wird, wobei das erste Muster eine Kombination aus dem Einheitsblock und einem Pilotsymbol für jede der Schichten ist;
**gekennzeichnet durch**:
Generieren einer Zufallsreihe oder einer spezifischen Signalfolge,
Generieren einer Vielzahl von Übertragungsblockmustern mit unterschiedlichen Mustern, und
Platzieren eines entsprechenden Übertragungsblockmusters der Vielzahl von Übertragungsblockmustern in der zeitlichen Richtung oder in der Frequenzrichtung auf der Grundlage der Zufallsreihe oder der spezifischen Signalsequenz.

7. Programmspeichermedium, das ein Programm speichert, das eine Empfangseinrichtung (6a) steuert, die ein von der Übertragungseinrichtung (5a) nach Anspruch 1 empfangenes Signal empfängt, wobei das Programm die Empfangseinrichtung (6a) veranlasst, durchzuführen:
Generieren eines in Anspruch 1 definierten Übertragungsblockmusters auf einer Pro-Schicht-Basis;
Schätzen einer elektrischen Interferenzleistung für einen Null-Subträger auf der Grundlage des Übertragungsblockmusters unter Verwendung eines Empfangssignals eines von der Übertragungseinrichtung (5a) übertragenen Signals, wobei der Null-Subträger ein Subträger ist, auf den ein Nullsymbol gemappt wird; und
Dekodieren des Empfangssignals in einen Datenblock auf der Grundlage des Übertragungsblockmusters, um Likelihood-Informationen über jedes Symbol auf der Grundalge von Informationen über die elektrische Interferenzleistung zu generieren;
**gekennzeichnet durch**:
Generieren einer Zufallsreihe oder einer spezifischen Signalfolge,
Generieren einer Vielzahl von Übertragungsblockmustern mit unterschiedlichen Mustern,
Schätzen der elektrischen Interferenzleistung durch Identifizieren einer Position des Null-Subträgers auf der Grundlage der Vielzahl von Übertragungsblockmustern, die auf der Grundlage der Zufallsreihe oder der spezifischen Signalsequenz platziert werden, und
Dekodieren des Empfangssignals in einen Datenblock auf der Grundlage der Vielzahl von Übertragungsblockmustern, die auf der Grundlage der Zufallsreihe oder der spezifischen Signalsequenz platziert werden, und Generieren der Likelihood-Informationen über jedes Symbol auf der Grundlage der Informationen über die elektrische Interferenzleistung.

## Revendications

1. Dispositif de transmission (5a) comprenant :
une unité de codage (14) configurée
pour effectuer un codage sur une séquence de symboles modulés à l'aide d'un codage spatio-temporel en blocs ou d'un codage spatio-fréquentiel en blocs afin de générer des séquences de symboles pour une pluralité de couches ;
une unité de génération de motif de bloc de transmission (41) configurée pour générer, par couche, un motif de bloc de transmission comportant au moins un bloc unitaire, le bloc unitaire comportant au moins un bloc de données formé de ressources agencées consécutivement dans une direction temporelle ou dans une direction fréquentielle et un symbole nul ;
une unité de mappage de sous-porteuses (20a) configurée pour déployer le motif de bloc de transmission selon un agencement répétitif dans la direction temporelle et dans la direction fréquentielle, et pour mapper les séquences de symboles pour une pluralité de couches sur des sous-porteuses ; et
une pluralité d'unités de traitement de transmission (25) configurées pour transmettre une pluralité de signaux tels que mappés par l'unité de mappage des sous-porteuses (20a), dans lequel
le motif de bloc de transmission est un second motif qui est une combinaison d'un premier motif et d'un motif généré par décalage cyclique du premier motif dans la direction temporelle ou dans la direction fréquentielle sans division du bloc unitaire, le premier motif étant une combinaison du bloc unitaire et d'un symbole pilote pour chacune des couches ;
**caractérisé en ce qu'**il comprend en outre :
une unité de génération de série aléatoire (40) configurée pour générer une série aléatoire ou une séquence de signaux spécifique, dans lequel
l'unité de génération de motifs de bloc de transmission (41) est configurée pour générer une pluralité de motifs de bloc de transmission ayant des motifs différents, et
l'unité de mappage de sous-porteuses (20a) est configurée pour placer un motif de bloc de transmission correspondant de la pluralité de motifs de bloc de transmission dans la direction temporelle ou dans la direction fréquentielle sur la base de la série aléatoire ou de la séquence de signaux spécifique.

2. Dispositif de réception (6a) pour recevoir un signal transmis par le dispositif de transmission (5a) selon la revendication 1, le dispositif de réception (6a) comprenant :
une unité de génération de motif de transmission (41) ayant la même fonctionnalité que l'unité de génération de motif de transmission (41) incluse dans le dispositif de transmission de la revendication 1 (5a) ;
une unité de mesure d'interférence (35a) configurée pour estimer la puissance électrique d'interférence pour une sous-porteuse nulle sur la base du motif de bloc de transmission généré par l'unité de génération de motif de bloc de transmission (41), à l'aide d'un signal de réception d'un signal transmis par le dispositif de transmission (5a), la sous-porteuse nulle étant une sous-porteuse sur laquelle un symbole nul est mappé ; et
une unité de décodage (36a) configurée pour décoder le signal de réception en un bloc de données sur la base du motif de bloc de transmission afin de générer des informations de vraisemblance sur chaque symbole sur la base des informations sur la puissance électrique d'interférence ; **caractérisé en ce qu'**il comprend en outre :
une unité de génération de série aléatoire (40) configurée pour générer une série aléatoire ou une séquence de signaux spécifique, dans lequel
l'unité de génération de motif de bloc de transmission (41) est configurée pour générer une pluralité de motifs de bloc de transmission ayant des motifs différents,
l'unité de mesure d'interférence (35a) est configurée pour estimer la puissance électrique d'interférence en identifiant une position de la sous-porteuse nulle sur la base de la pluralité de motifs de bloc de transmission placés sur la base de la série aléatoire ou de la séquence de signaux spécifique, et
l'unité de décodage (36a) est configurée pour décoder le signal de réception en un bloc de données sur la base de la pluralité de motifs de bloc de transmission placés sur la base de la série aléatoire ou de la séquence de signaux spécifique, et pour générer les informations de vraisemblance sur chaque symbole sur la base des informations sur la puissance électrique d'interférence.

3. Système de communication sans fil (4) comprenant :
le dispositif de transmission (5a) selon la revendication 1 et le dispositif de réception (6a) selon la revendication 2.

4. Procédé de commande d'un dispositif de transmission (5a) qui transmet une pluralité de signaux, comprenant :
le codage sur une séquence de symboles modulés à l'aide d'un codage spatio-temporel en blocs ou d'un codage spatio-fréquentiel en blocs afin de générer des séquences de symboles pour une pluralité de couches ;
la génération, par couche, d'un motif de bloc de transmission comportant au moins un bloc unitaire, le bloc unitaire comportant au moins un bloc de données formé de ressources agencées consécutivement dans une direction temporelle ou dans une direction fréquentielle et un symbole nul ;
le déploiement du motif de bloc de transmission dans un agencement répétitif dans la direction temporelle et dans la direction fréquentielle, et le mappage des séquences de symboles pour une pluralité de couches sur des sous-porteuses ; et
la transmission d'une pluralité de signaux tels que mappés, dans lequel
le motif de bloc de transmission est un second motif qui est une combinaison d'un premier motif et d'un motif généré par décalage cyclique du premier motif dans la direction temporelle ou dans la direction fréquentielle sans division du bloc unitaire, le premier motif étant une combinaison du bloc unitaire et d'un symbole pilote pour chacune des couches ;
**caractérisé par** :
la génération d'une série aléatoire ou d'une séquence de signaux spécifique,
la génération d'une pluralité de motifs de bloc de transmission ayant des motifs différents, et
le placement d'un motif de bloc de transmission correspondant de la pluralité de motifs de bloc de transmission dans la direction temporelle ou dans la direction fréquentielle sur la base de la série aléatoire ou de la séquence de signaux spécifique.

5. Procédé de commande d'un dispositif de réception (6a) qui reçoit un signal émis par le dispositif de transmission (5a) selon la revendication 1, comprenant :
la génération, par couche, d'un motif de bloc de transmission tel que défini dans la revendication 1 ;
l'estimation de la puissance électrique d'interférence pour une sous-porteuse nulle sur la base du motif de bloc de transmission à l'aide d'un signal de réception d'un signal transmis par le dispositif de transmission (5a), la sous-porteuse nulle étant une sous-porteuse sur laquelle un symbole nul est mappé ; et
le décodage du signal de réception en un bloc de données sur la base du motif de bloc de transmission afin de générer des informations de vraisemblance sur chaque symbole sur la base des informations sur la puissance électrique d'interférence ;
**caractérisé en ce que** le procédé comprend en outre
la génération d'une série aléatoire ou d'une séquence de signaux spécifique,
la génération d'une pluralité de motifs de blocs de transmission ayant des motifs différents,
l'estimation de la puissance électrique d'interférence en identifiant une position de la sous-porteuse nulle sur la base de la pluralité de motifs de bloc de transmission placés sur la base de la série aléatoire ou de la séquence de signaux spécifique, et
le décodage du signal de réception en un bloc de données sur la base de la pluralité de motifs de bloc de transmission placés sur la base de la série aléatoire ou de la séquence de signaux spécifique, et la génération des informations de vraisemblance sur chaque symbole sur la base des informations sur la puissance électrique d'interférence.

6. Support de stockage de programme stockant un programme qui commande un dispositif de transmission (5a) qui transmet une pluralité de signaux, le programme amenant le dispositif de transmission (5a) à effectuer :
le codage sur une séquence de symboles modulés à l'aide d'un codage spatio-temporel en blocs ou d'un codage spatio-fréquentiel en blocs afin de générer des séquences de symboles pour une pluralité de couches ;
la génération, par couche, d'un motif de bloc de transmission comportant au moins un bloc unitaire, le bloc unitaire comportant au moins un bloc de données formé de ressources agencées consécutivement dans une direction temporelle ou dans une direction fréquentielle et un symbole nul ;
le déploiement du motif de bloc de transmission dans un agencement répétitif dans la direction temporelle et dans la direction fréquentielle, et le mappage des séquences de symboles pour une pluralité de couches sur des sous-porteuses ; et
la transmission d'une pluralité de signaux tels que mappés, dans lequel
le motif de bloc de transmission est un second motif qui est une combinaison d'un premier motif et d'un motif généré par décalage cyclique du premier motif dans la direction temporelle ou dans la direction fréquentielle sans division du bloc unitaire, le premier motif étant une combinaison du bloc unitaire et d'un symbole pilote pour chacune des couches ;
**caractérisé par** :
la génération d'une série aléatoire ou d'une séquence de signaux spécifique,
la génération d'une pluralité de motifs de bloc de transmission ayant des motifs différents, et
le placement d'un motif de bloc de transmission correspondant de la pluralité de motifs de bloc de transmission dans la direction temporelle ou dans la direction fréquentielle sur la base de la série aléatoire ou de la séquence de signaux spécifique.

7. Support de stockage de programme stockant un programme qui commande un dispositif de réception (6a) qui reçoit un signal transmis par le dispositif de transmission (5a) selon la revendication 1, le programme amenant le dispositif de réception (6a) à effectuer :
la génération, par couche, d'un motif de bloc de transmission tel que défini dans la revendication 1 ;
l'estimation de la puissance électrique d'interférence pour une sous-porteuse nulle sur la base du motif de bloc de transmission à l'aide d'un signal de réception d'un signal transmis par le dispositif de transmission (5a), la sous-porteuse nulle étant une sous-porteuse sur laquelle un symbole nul est mappé ; et
le décodage du signal de réception en un bloc de données sur la base du motif de bloc de transmission afin de générer des informations de vraisemblance sur chaque symbole sur la base des informations sur la puissance électrique d'interférence ;
**caractérisé par** :
la génération d'une série aléatoire ou d'une séquence de signaux spécifique,
la génération d'une pluralité de motifs de blocs de transmission ayant des motifs différents,
l'estimation de la puissance électrique d'interférence en identifiant une position de la sous-porteuse nulle sur la base de la pluralité de motifs de bloc de transmission placés sur la base de la série aléatoire ou de la séquence de signaux spécifique, et
le décodage du signal de réception en un bloc de données sur la base de la pluralité de motifs de bloc de transmission placés sur la base de la série aléatoire ou de la séquence de signaux spécifique, et la génération des informations de vraisemblance sur chaque symbole sur la base des informations sur la puissance électrique d'interférence.
